# EUROPÄISCHE PATENTSCHRIFT

(11) **EP 2 934 788 B1**
(45) Veröffentlichungstag und Bekanntmachung des Hinweises auf die Patenterteilung: **27.02.2019**
(21) Anmeldenummer: 13830178.3
(22) Anmeldetag: 20.12.2013
(51) Int. Cl.: B22C 1/18

(54) **FORMSTOFFMISCHUNGEN ENTHALTEND METALLOXIDE DES ALUMINIUMS UND ZIRKONIUMS IN PARTIKULÄRER FORM**
MOLD MATERIAL MIXTURES CONTAINING METAL OXIDES OF ALUMINUM AND ZIRCONIUM IN PARTICULATE FORM
MÉLANGE DE MATIÈRES À MOULER CONTENANT DES OXYDES MÉTALLIQUES DE L'ALUMINIUM ET DU ZIRCONIUM SOUS FORME PARTICULAIRE

(30) Priorität: 22.12.2012 DE 102012113074
(43) Veröffentlichungstag der Anmeldung: 28.10.2015
(73) Patentinhaber: ASK Chemicals GmbH, 40721 Hilden (DE)
(72) Erfinder: DETERS, Heinz, 40239 Düsseldorf (DE); ZUPAN, Henning, 42289 Wuppertal (DE); OBERLEITER, Martin, 40229 Düsseldorf (DE)
(74) Vertreter: Müller Schupfner & Partner Patent- und Rechtsanwaltspartnerschaft mbB
(86) Internationale Anmeldenummer: PCT/DE2013/000814
(87) Internationale Veröffentlichungsnummer: WO 2014/094722

(56) Entgegenhaltungen:
- WO-A1-2013/159762

## Beschreibung

Die Erfindung betrifft Formstoffmischungen enthaltend ein Oxid des Aluminiums und ein Oxid des Zirkoniums als partikuläres gemischtes Metalloxid, in Kombination mit feuerfesten Formgrundstoffen und Wasserglas als Bindemittel. Das partikuläre gemischte Metalloxid ist im Sinne der vorliegenden Erfindung eine Mischung von zumindest zwei Oxiden, eine Mischung von zumindest einem Mischoxid und zumindest einem Oxid oder ein Mischoxid oder eine Mischung von Mischoxiden. Diese gemischten Metalloxide zeigen bei Raumtemperatur keine oder nur eine sehr geringe Reaktionsfreudigkeit mit alkalischem Wasserglas. Die Formstoffmischungen, auch in Form von Mehrkomponenten¬,-Systemen, werden zur Herstellung von Formen und Kernen für die Gießereiindustrie eingesetzt.

### Stand der Technik

Gießformen setzen sich im Wesentlichen aus Kernen und Formen zusammen, welche die Negativformen des herzustellenden Gussstücks darstellen. Diese Kerne und Formen bestehen dabei aus einem feuerfesten Material, beispielsweise Quarzsand, und einem geeigneten Bindemittel, das der Gießform nach der Entnahme aus dem Formwerkzeug eine ausreichende mechanische Festigkeit verleiht. Für die Herstellung von Gießformen verwendet man also einen feuerfesten Formgrundstoff, welcher mit einem geeigneten Bindemittel umhüllt ist. Der feuerfeste Formgrundstoff liegt bevorzugt in einer rieselfähigen Form vor, so dass er in eine geeignete Hohlform eingefüllt und dort verdichtet werden kann. Durch das Bindemittel wird ein fester Zusammenhalt zwischen den Partikeln des Formgrundstoffs erzeugt, so dass die Gießform die erforderliche mechanische Stabilität erhält.

Gießformen müssen verschiedene Anforderungen erfüllen. Beim Gießvorgang selbst müssen sie zunächst eine ausreichende Festigkeit und Temperaturbeständigkeit aufweisen, um das flüssige Metall in den aus einem oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände der Gießform ausbildet.

In der WO 2008/046651 A1 werden Formstoffmischungen enthaltend feuerfesten Formgrundstoff, Wasserglas, ein teilchenförmiges Metalloxid, vorzugsweise amorphes Siliziumdioxid, und Kohlenhydrate offenbart.

Anorganische Bindemittelsysteme haben gegenüber organischen Bindemittelsystemen weiterhin den Nachteil, dass daraus hergestellte Gießformen oft zu starken Sandanhaftungen und Penetrationen am Gussstück führen, was mit einem erheblichen Reinigungsaufwand und somit Mehrkosten für die Gießereien verbunden ist. Auch das Entkernverhalten, d.h. der Fähigkeit der Gießform, nach dem Metallguss schnell (unter mechanischer Belastung) in eine leicht schüttfähige Form zu zerfallen, ist bei rein anorganisch hergestellten Gießformen (z.B. solche die Wasserglas als Bindemittel verwenden) häufig schlechter als bei Gießformen, die mit einem organischen Bindemittel hergestellt wurden. Diese letztgenannte Eigenschaft, ein schlechteres Entkernverhalten, ist besonders dann nachteilig, wenn dünnwandige bzw. filigrane oder komplexe Gießformen verwendet werden, welche sich nach dem Abguss prinzipiell schwer entfernen lassen. Als Beispiel können hier sogenannte Wassermantelkerne angebracht werden, die bei der Herstellung von gewissen Bereichen eines Verbrennungsmotors nötig sind.

Weiterhin ist bekannt, der Formstoffmischung organische Komponenten zuzugeben, die unter dem Einfluss des heißen Metalls pyrolysieren/reagieren und dadurch, einerseits, den Zerfall der Gießform nach dem Guss durch Porenbildung erleichtern und, andererseits, zu verbesserten Gussoberflächen führen können. Allerdings führt die Verwendung von organischen Komponenten in Formstoffmischungen während des Abgusses zu Emissionen von CO₂ und anderen Pyrolyseprodukten.

Die US 3203057 offenbart Formstoffmischungen bestehend aus einem feinen Feuerfestmaterial, einem flüssigen Bindemittel, wobei dieses im Besonderen eine Alkali-Silikat Lösung ist, sowie einem Al₂O₃ haltigen Wirkstoff, der das Entkernverhalten der Gießform nach dem Metallguss verbessert. Unter Al₂O₃ haltigen Wirkstoffen werden reines Aluminiumoxid, bekannte Mischoxide wie Aluminosilikate, Tonmineralien wie z.B. Bentonit oder Montmorillonit, natürlich vorkommende Al₂O₃ haltige Wirkstoffe wie Bauxit sowie andere Mineralien wie Cement und Kaolin verstanden. Die Al₂O₃-haltigen Wirkstoffe werden hier nur sehr allgemein beschrieben und es finden sich keine genauen Angaben, welche dieser Stoffe sich besonders gut für die Entkernbarkeit der Gießform, die Verarbeitungszeit der Formstoffmischung, die Gussoberflächengüte des betreffenden Gussstücks eignen.

Anorganische Bindemittelsysteme haben gegenüber organischen Bindemittelsystemen weiterhin den Nachteil, dass daraus hergestellte Gießformen oft zu starken Sandanhaftungen und Penetrationen am Gussstück führen, was mit einem erheblichen Reinigungsaufwand und somit Mehrkosten für die Gießereien verbunden ist. Auch das Entkernverhalten, d.h. der Fähigkeit der Gießform, nach dem Metallguss schnell (unter mechanischer Belastung) in eine leicht schüttfähige Form zu zerfallen, ist bei rein anorganisch hergestellten Gießformen (z.B. solche die Wasserglas als Bindemittel verwenden) häufig schlechter als bei Gießformen, die mit einem organischen Bindemittel hergestellt wurden. Diese letztgenannte Eigenschaft, ein schlechteres Entkernverhalten, ist besonders dann nachteilig, wenn dünnwandige bzw. filigrane oder komplexe Gießformen verwendet werden, welche sich nach dem Abguss prinzipiell schwer entfernen lassen. Als Beispiel können hier sogenannte Wassermantelkerne angebracht werden, die bei der Herstellung von gewissen Bereichen eines Verbrennungsmotors nötig sind.

Weiterhin ist bekannt, der Formstoffmischung organische Komponenten zuzugeben, die unter dem Einfluss des heißen Metalls pyrolysieren/reagieren und dadurch, einerseits, den Zerfall der Gießform nach dem Guss durch Porenbildung erleichtern und, andererseits, zu verbesserten Gussoberflächen führen können. Allerdings führt die Verwendung von organischen Komponenten in Formstoffmischungen während des Abgusses zu Emissionen von CO₂ und anderen Pyrolyseprodukten.

Die US 3203057 offenbart Formstoffmischungen bestehend aus einem feinen Feuerfestmaterial, einem flüssigen Bindemittel, wobei dieses im Besonderen eine Alkali-Silikat Lösung ist, sowie einem Al₂O₃ haltigen Wirkstoff, der das Entkernverhalten der Gießform nach dem Metallguss verbessert. Unter Al₂O₃ haltigen Wirkstoffen werden reines Aluminiumoxid, bekannte Mischoxide wie Aluminosilikate, Tonmineralien wie z.B. Bentonit oder Montmorillonit, natürlich vorkommende Al₂O₃ haltige Wirkstoffe wie Bauxit sowie andere Mineralien wie Cement und Kaolin verstanden. Die Al₂O₃-haltigen Wirkstoffe werden hier nur sehr allgemein beschrieben und es finden sich keine genauen Angaben, welche dieser Stoffe sich besonders gut für die Entkernbarkeit der Gießform, die Verarbeitungszeit der Formstoffmischung, die Gussoberflächengüte des betreffenden Gussstücks eignen.

Die US 4233076 offenbart Formstoffmischungen bestehend aus Sand, einem Alkalisilikat-Binder, mindestens einem Härter, welcher ausgewählt ist aus der Gruppe von Alkylencarbonat, einer organischen Monocarbon- oder Dicarbonsäure bzw. deren Methylester, Kohlendioxid oder Hochofenschlacke, sowie einem Al₂O₃ haltigen Stoff, dessen durchschnittliche Korngrößenverteilung zwischen 0,2 und 5 µm liegt. Es wird beschrieben, dass der aluminiumoxidhaltige Feststoff vorzugsweise eine BET-Oberfläche zwischen 3 und 40 m²/g aufweist. Als bevorzugt wird Al₂O₃·3H₂O offenbart.

Die JP 4920794 B1 offenbart Formstoffmischungen bestehend aus einem Gießereisand, einem Alkalisilikat-Binder und amorphen Sphäroiden, die durch saures, kugelförmiges Siliziumdioxid und saures, kugelförmiges Aluminiumoxid gestaltet sind. Diese amorphen Sphäroide sollen als sogenannte "Superplasticizer" dienen und die Aushärtung unterstützen, was schließlich zu höheren Festigkeiten führt.

### Probleme des Standes der Technik und Aufgabenstellung

Die bisher bekannten anorganischen Bindemittelsysteme für Gießereizwecke weisen noch Raum für Verbesserungen auf. Vor allem ist es wünschenswert, ein anorganisches Bindemittelsystem zu entwickeln, welches:
(a) keine oder zumindest eine deutlich reduzierte Menge an Emissionen von CO₂ und organischen Pyrolyseprodukten, gasförmig und/oder aerosolförmig, z.B. aromatischen Kohlenwasserstoffen, während des Metallgießens entstehen lässt,
(b) ein entsprechendes Festigkeitsniveau erreicht, welches im automatisierten Fertigungsprozess nötig ist, insbesondere eine ausreichende Heißfestigkeit und Festigkeit nach Lagerung,
(c) eine sehr gute Oberflächengüte des betreffenden Gussstücks (auch ohne den Einsatz von Feuerfestbeschichtungen) ermöglicht, so dass keine oder zumindest nur eine geringe Nachbearbeitung notwendig ist,
(d) zu einer guten Zerfallseigenschaft der Gießform nach dem Metallguss führt, so dass das betreffende Gussstück leicht und rückstandsfrei von der Gießform getrennt werden kann,
(e) im Falle der Heißaushärtung und/oder CO₂-Aushärtung eine möglichst lange Verarbeitungszeit der damit hergestellten Formstoffmischung ermöglicht, und
(f) mit einem Formgrundstoff eine gute fließfähige Formstoffmischung ergibt, sodass auch Gießformen mit komplexer Geometrie ermöglicht werden können.

Der Erfindung lag daher die Aufgabe zugrunde, eine Formstoffmischung zur Herstellung von Gießformen für die Metallverarbeitung zur Verfügung zu stellen, welche den oben beschriebenen Anforderungen (a)-(f) entspricht.

Insbesondere zeichnet sich die erfindungsgemäße Formstoffmischung dadurch aus, dass sie die Gussoberfläche des betreffenden Gussstücks verbessert, ohne auf die Zugabe von organischen Additiven angewiesen zu sein. Diese Beobachtung kann insbesondere im Eisen- und Stahlguss, aber auch im Leichtmetall- und Nichteisenmetallguss gemacht werden.

### Zusammenfassung der Erfindung

Die oben beschriebenen Anforderungen werden mit einer Formstoffmischung mit den Merkmalen der unabhängigen Patentansprüche gelöst. Vorteilhafte Weiterbildungen der erfindungsgemäßen Formstoffmischung sind Gegenstand der abhängigen Patentansprüche oder nachfolgend beschrieben.

Überraschend wurde gefunden, dass durch den Zusatz von partikulären Oxiden des Aluminiums und des Zirkoniums, insbesondere neben amorphem partikulären Siliziumdioxid, zur Formstoffmischung Gießformen auf der Basis anorganischer Bindemittel hergestellt werden können, die eine hohe Festigkeit sowohl unmittelbar nach der Herstellung als auch bei längerer Lagerung aufweisen. Ein besonderer Vorteil liegt darin, dass nach dem Metallguss ein Gussstück, insbesondere aus Eisen oder Stahl mit sehr hoher Oberflächenqualität erhalten wird, sodass nach der Entfernung der Gießform nur eine geringe oder sogar gar keine Nachbearbeitung der Oberfläche des Gussstücks erforderlich ist.

Die Oberflächengüte des betreffenden Gussstücks, insbesondere aus Eisen oder Stahl, ist unter Verwendung der erfindungsgemäßen Formstoffmischung sogar teilweise vergleichbar mit solchen Oberflächen, die sich mithilfe organisch gebundener und mit einer Feuerfestschicht beschichteter Gießformen realisieren lassen. Eine Feuerfestbeschichtung lässt sich mit sogenannten Schlichten erzielen, die nach der Gießformherstellung auf eben solche aufgetragen werden müssen. Der Vorteil der erfindungsgemäßen Formstoffmischung besteht also auch darin, dass dieser Beschichtungsprozess für viele Gießgeometrien entfallen kann, was mit erheblichen Kosteneinsparungen für die jeweiligen Gießereien verbunden ist.

Bevorzugt enthält die Formstoffmischung keine organischen Komponenten, sodass keine Emissionen von CO₂ und anderen Pyrolyseprodukten entstehen. Aus diesem Grund kann die Belastung, insbesondere am Arbeitsplatz, durch gesundheitsschädliche Emissionen eingeschränkt werden. Auch stellt die Verwendung der erfindungsgemäßen Formstoffmischung einen Beitrag zur Reduzierung von klimaschädlichen Emissionen (durch CO₂ und andere, organische Pyrolyseprodukte) dar.

Die erfindungsgemäße Formstoffmischung zur Herstellung von Gießformen für die Metallverarbeitung umfasst mindestens:
a) einen feuerfesten Formgrundstoff;
b) ein anorganisches Bindemittel und
c) zumindest ein partikuläres gemischtes Metalloxid, wobei das partikuläre gemischte Metalloxid
   - zumindest ein partikuläres Mischoxid,
   - eine partikuläre Mischung von zumindest zwei Oxiden ist oder
   - zumindest ein partikuläres Mischoxid neben zumindest einem weiteren partikulären Oxid vorliegt,
und das partikuläre gemischte Metalloxid zumindest ein Oxid des Aluminiums und zumindest ein Oxid des Zirkoniums umfasst.

Das partikuläre gemischte Metalloxid zeigt bei Raumtemperatur keine bzw. zumindest aber eine sehr geringe Reaktionsfreudigkeit mit dem anorganischen Bindemittel, insbesondere dem alkalischen Wasserglas, auf.

### Detaillierte Beschreibung der Erfindung

Als feuerfester Formgrundstoff können für die Herstellung von Gießformen übliche Materialien verwendet werden. Geeignet sind beispielsweise Quarz- oder Chromerzsand, Olivin, Vermiculit, Bauxit und Schamotte, insbesondere mehr als 50 Gew.% Quarzsand bezogen auf den feuerfesten Formgrundstoff. Dabei ist es nicht notwendig, ausschließlich Neusande einzusetzen. Im Sinne einer Ressourcenschonung und zur Vermeidung von Deponiekosten ist es sogar vorteilhaft, einen möglichst hohen Anteil an regeneriertem Altsand zu verwenden.

Der feuerfeste Formgrundstoff macht vorzugsweise größer 80 Gew.%, insbesondere größer 90 Gew.% der Formstoffmischung aus.

Ein geeigneter regenerierter Sand wird z.B. in der WO 2008/101668 (= US 2010/173767 A1) beschrieben. Gleichfalls geeignet sind Regenerate, die durch Waschen und anschließende Trocknung erhalten werden. Einsetzbar, aber weniger bevorzugt sind durch rein mechanische Behandlung gewonnene Regenerate. In der Regel können die Regenerate mindestens ca. 70 Gew.% des Neusands (der feuerfesten Formgrundstoffe) ersetzen, bevorzugt mindestens ca. 80 Gew.% und besonders bevorzugt mindestens ca. 90 Gew.%. Bevorzugt sind Regenerate des feuerfesten Formgrundstoffs die zur Regeneration auf eine Temperatur von mindestens 200°C erhitzt wurden und insbesondere während dieser thermischen Behandlung bewegt wurden.

Weiter können als feuerfeste Formgrundstoffe auch künstliche Formstoffe verwendet werden wie z.B. Glasperlen, Glasgranulat, die unter der Bezeichnung "Cerabeads" bzw. "Carboaccucast" bekannten kugelförmigen keramischen Formgrundstoffe oder Aluminiumsilikatmikrohohlkugeln (sog. Microspheres). Solche Aluminiumsilikatmikrohohlkugeln werden beispielsweise von der Omega Minerals Germany GmbH, Norderstedt, in verschiedenen Qualitäten mit unterschiedlichen Gehalten an Aluminiumoxid unter der Bezeichnung "Omega-Spheres" in den Handel gebracht. Entsprechende Produkte sind bei der PQ Corporation (USA) unter der Bezeichnung "Extendospheres" erhältlich.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die mittlere Partikelgröße lässt sich z.B. durch Siebung nach DIN 66165 (Teil 2) mit Analysensieben DIN ISO 3310-1 bestimmen. Besonders bevorzugt sind Teilchenformen mit größter Längenausdehnung zu kleinster Längenausdehnung (in beliebigen Raumrichtungen) von 1:1 bis 1:5 oder 1:1 bis 1:3, d.h. solche die z.B. nicht faserförmig sind.

In Gießversuchen, insbesondere mit Aluminium, wurde gefunden, dass künstliche Formgrundstoffe, vor allem Glasperlen, Glasgranulat bzw. Microspheren, zur Erzeugung glatterer Gussoberflächen beitragen können. Es ist dabei nicht notwendig, den gesamten Formgrundstoff aus den künstlichen Formgrundstoffen zu bilden. Der bevorzugte Anteil der künstlichen Formgrundstoffe liegt bei mindestens etwa 3 Gew.%, besonders bevorzugt mindestens 5 Gew.%, insbesondere bevorzugt mindestens 10 Gew.%, vorzugsweise bei mindestens etwa 15 Gew.-%, besonders bevorzugt bei mindestens etwa 20 Gew.%, bezogen auf die gesamte Menge des feuerfesten Formgrundstoffes.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Die Wassergläser als anorganisches Bindemittel enthalten gelöste Alkalisilikate und können durch Lösen von glasartigen Lithium-, Natrium- und/oder Kaliumsilikaten in Wasser hergestellt werden. Das Wasserglas weist vorzugsweise ein molares Modul SiO₂/M₂O im Bereich von 1,6 bis 4,0, insbesondere 2,0 bis kleiner 3,5, auf, wobei M für Lithium, Natrium oder Kalium steht. Die Bindemittel können auch auf Wassergläsern basieren, die mehr als eins der genannten Alkaliionen enthalten, wie z.B. die aus DE 2652421 A1 (= GB1532847 A) bekannten lithiummodifizierten Wassergläser. Weiterhin können die Wassergläser auch mehrwertige Ionen enthalten wie z.B. die in EP 2305603 A1 (= WO 2011/042132 A1) beschriebenen Al-modifizierten Wassergläser. Auch B-modifizierte Wassergläser sind möglich. Die Wassergläser weisen einen Feststoffanteil im Bereich von 25 bis 65 Gew.% auf, vorzugsweise von 30 bis 60 Gew.%. Der Feststoffanteil bezieht sich auf die im Wasserglas enthaltene Menge an SiO₂ und M₂O. Je nach Anwendung und gewünschtem Festigkeitsniveau werden zwischen 0,5 Gew.% und 5 Gew.% des auf Wasserglas basierenden Bindemittels eingesetzt, vorzugsweise zwischen 0,75 Gew.% und 4 Gew.%, besonders bevorzugt zwischen 1 Gew.% und 3,5 Gew.%, jeweils bezogen auf den Formgrundstoff. Die Angaben beziehen sich auf die Gesamtmenge des Wasserglasbinders, einschließlich des (insbesondere wässrigen) Lösungs- bzw. Verdünnungsmittels und des (etwaigen) Feststoffanteils (=100%).

Überraschend wurde gefunden, dass durch den Zusatz von obigen partikulären gemischten Metalloxiden zur Formstoffmischung Gießformen auf der Basis anorganischer Bindemittel hergestellt werden können, die nicht nur eine hohe Festigkeit sowohl unmittelbar nach der Herstellung als auch bei längerer Lagerung aufweisen, sondern auch zu einer guten Oberflächengüte des Gussstücks, insbesondere aus Eisen und Stahl, führen. Unter partikulären gemischten Metalloxiden enthaltend jeweils neben einem Oxid des Aluminiums zusätzlich ein Oxid des Zirkoniums werden nicht nur reine Aluminiumoxide und Zirkoniumoxide verstanden, sondern auch Mischoxide wie beispielsweise Aluminiumsilikate und Zirkoniumoxid oder heterogene, d.h. aus mehreren Phasen bestehende Stoffgemische, die unter anderem aus einem oder mehreren aluminiumoxidhaltigen und zirkoniumoxidhaltigen Feststoffen bzw. Phasen bestehen.

Bevorzugt ist das erfindungsgemäße, partikuläre gemischte Metalloxid ausgewählt aus einem oder mehreren Mitgliedern der Gruppe von a) Korund plus Zirkoniumdioxid, b) Zirkonmullit, c) Zirkonkorund und d) Aluminiumsilikaten plus Zirkoniumdioxid und kann daneben ggf. weitere Metalloxide enthalten. Die Aluminiumsilikate sind im Falle eines nicht amorphen Stoffes (d.h. es liegt hier Kristallinität bzw. Teilkristallinität vor) vorzugsweise Inselsilikate, d.h. die in der Struktur enthaltenen SiO₄-Einheiten (tetraedrisch) sind nicht direkt miteinander verknüpft (keine Si-O-Si Verknüpfungen), stattdessen finden sich Verknüpfungen der tetraedrischen SiO₄ Einheiten zu einem oder mehrern Al-Atomen (Si-O-Al). In der Struktur der hier beanspruchten Inselsilikate liegen die die AI-Atome in 4-, 5-, und/oder 6-fach Koordination von Sauerstoffatomen vor. Typische Vertreter dieser Inselsilikate sind (nach der *Systematik der Minerale nach Strunz,* 9. Auflage) beispielsweise Mullit (Schmelz- und Sintermullit sind hier ebenso gemeint wie ZrO₂-haltiges Mullit), Sillimanit sowie andere Mitglieder der Sillimanit-Gruppe (beispielsweise Kyanit oder Andalusit), wobei aus der Sillimanit-Gruppe besonders bevorzugt Kyanit eingesetzt wird. Besonders bevorzugt wird ein amorphes Aluminiumsilikat mit größer 50 Atom% Aluminium Atomen bezogen auf die Summe aller Silizium und Aluminium Atome ebenfalls enthaltend Zirkonium / Zirkoniumoxid oder ein aluminiumoxid- und zirkoniumoxidhaltiger Staub, welcher als Nebenprodukt bei der Zirkonkorund-Herstellung entsteht und weiter unten näher beschrieben wird.

Unter Aluminiumsilikat werden im Sinne dieser Erfindung allgemein Aluminium-Silizium-Mischoxide verstanden, d.h. auch Alumosilikate und Aluminosilikate.

Die Feinheit der erfindungsgemäßen partikulären gemischten Metalloxide lässt sich durch Siebung ermitteln. Typischerweise beträgt der Rückstand bei einem Durchgang durch ein Sieb mit 75 µm Maschenweite (200 mesh) nicht mehr als ca. 50 Gew.%, vorzugsweise nicht mehr als ca. 30 Gew.%, weiter bevorzugt nicht mehr als ca. 20 Gew.% und besonders bevorzugt nicht mehr als ca. 15 Gew.%.

Die Bestimmung des Siebrückstandes erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird.

Die Kornform der partikulären gemischten Metalloxide kann im Grunde jegliche Form aufweisen wie beispielsweise faserförmig, splittrig, kantenförmig, plättchenförmig, kantengerundet oder auch rund. Bevorzugt werden allerdings kantengerundete und runde Partikelformen. Besonders bevorzugt werden runde Partikelformen eingesetzt, wobei diese ellipsoid oder kugelförmig sein können - kugelförmige werden hierbei bevorzugt.

Das Verhältnis größter Längenausdehnung zu kleinster Längenausdehnung der jeweiligen Partikelformen (für alle Raumrichtungen) ist bevorzugt kleiner als 10:1, besonders bevorzugt kleiner 5:1 und insbesondere bevorzugt kleiner als 3:1. Da kugelförmige Partikelformen in besonderem Maße vorteilhaft sind, ist ein Verhältnis größter Längenausdehnung zu kleinster Längenausdehnung von 1,1:1 bis 1:1 ideal.

Die mit REM-Aufnahmen und unter grafischer Auswertung bestimmbare durchschnittliche Primärpartikelgröße der erfindungsgemäßen partikulären gemischten Metalloxide ist typischerweise größer als 0,01 µm und bevorzugt größer als 0,02 µm. Diese Partikelgröße ist außerdem typischerweise kleiner als 50 µm, vorzugsweise kleiner als 20 µm, besonders bevorzugt kleiner als 10 µm und insbesondere bevorzugt kleiner als 5 µm.

Des Weiteren wurde die durchschnittliche spezifische Oberfläche der partikulären gemischte Metalloxide mithilfe von Gasadsorptionsmessungen (BET-Verfahren) nach DIN 66131 bestimmt. Die spezifische Oberfläche dieses Stoffes ist typischerweise kleiner als 50 m²/g, bevorzugt kleiner als 30 m²/g, besonders bevorzugt kleiner als 17 m²/g. Die spezifische Oberfläche dieses Stoffes ist typischerweise größer als 0,1 m²/g, bevorzugt größer als 0,5 m²/g, besonders bevorzugt größer als 1 m²/g.

Das Zirkoniumdioxid kann in der tetragonalen oder der monoklinen Modifikation vorliegen. Besonders bevorzugt, insbesondere für die Erzeugung glatter Gussoberflächen, wird ein partikuläres gemischtes Metalloxid verwendet, das als Nebenprodukt bei der Zirkonkorund-Herstellung entsteht und im Nachfolgenden näher beschrieben wird. Die Hauptbestandteile dieses Staubs sind Al₂O₃, ZrO₂ und SiO₂, wobei diese Oxide in unterschiedlichen Modifikationen des reinen Oxids oder in Form von Mischoxiden vorliegen können.

Der Anteil an Aluminium berechnet als Al₂O₃ an dem partikulären gemischten Metalloxid, bzw. dem Staub, ist vorteilhafterweise größer als 25 Gew.%, vorzugsweise größer als 30 Gew.%, besonders bevorzugt größer als 35 Gew.% und insbesondere bevorzugt größer als 40 Gew.%.

Der Anteil an Aluminium berechnet als Al₂O₃ an dem partikulären gemischten Metalloxid, bzw. dem Staub ist üblicherweise kleiner als 80 Gew.%, vorzugsweise kleiner als 70 Gew.%, besonders bevorzugt kleiner als 65 Gew.% und insbesondere bevorzugt kleiner als 60 Gew.%.

Der Anteil an Zirkonium berechnet als ZrO₂ an dem partikulären gemischten Metalloxid, bzw. dem Staub, ist vorteilhafterweise größer als 2 Gew.%, vorzugsweise größer als 4 Gew.%, besonders bevorzugt größer als 8 Gew.%. Der Anteil an Zirkonium berechnet als ZrO₂ an dem partikulären gemischten Metalloxid, bzw. dem Staub ist üblicherweise kleiner als 50 Gew.%, vorzugsweise kleiner als 40 Gew.% und besonders bevorzugt kleiner als 30 Gew.%.

Der Anteil des Siliziums (ausgenommen ist partikuläres amorphes Siliziumoxid), berechnet als SiO₂ an dem partikulären gemischten Metalloxid, bzw. dem Staub, ist, wenn vorhanden, vorteilhafterweise größer als 5 Gew.%, vorzugsweise größer als 15 Gew.%, besonders bevorzugt größer als 20 Gew.%. Der Anteil des Siliziums berechnet als SiO₂ an dem partikulären gemischten Metalloxid, bzw. dem Staub ist üblicherweise kleiner als 60 Gew.%, vorzugsweise kleiner als 50 Gew.% und besonders bevorzugt kleiner als 45 Gew.%. Auch andere Oxide können als Verunreinigungen in dem partikulären gemischten Metalloxid, bzw. dem Staub, vorhanden sein wie beispielsweise Fe₂O₃, Na₂O TiO₂, MgO und CaO. Der Anteil dieser Verunreinigungen ist nach einer Ausgestaltung üblicherweise kleiner als 12 Gew.%, vorzugsweise kleiner als 8 Gew.% und insbesondere bevorzugt kleiner als 4 Gew.%.

Das Aluminium kommt in mehreren Phasen in dem heterogenen Staub aus der Zirkonkorund-Herstellung vor. Als kristalline Phase lässt sich mit Hilfe der Röntgenpulverdiffraktometrie eindeutig Korund (α-Al₂O₃) bestimmen. Solche Messungen können beispielsweise an einem Vollschutz-Diffraktometer der Firma PANalytical (X'pert PW3040) durchgeführt werden, das mit einem Primär-Monochromator und einem ortsempfindlichen Detektor ausgestattet ist. Geringe Mengen an kristallinem synthetischen Mullit (etwa Al_{2.4}Si_{0,6}O_{4,8}) können ebenfalls mit Hilfe dieser Methode gefunden werden.

Neben diesen mit der Röntgenpulverdiffraktometrie gefundenen Phasen deuten ²⁷Al Festkörper NMR Messungen darauf hin, dass weitere aluminiumhaltige Phasen vorhanden sind, welche - so vermuten die Erfinder - amorph sind. Solche Messungen lassen sich beispielsweise mit Hilfe eines BRUKER AVANCE DSX 500 Spektrometers (Magnetische Flussdichte von 11,74 Tesla) unter Zuhilfenahme der Magic-Angle-Spinning Technik (MAS, etwa 25 kHz) durchführen.

Mit rasterelektronenmikroskopischen Aufnahmen (REM-Aufnahmen mit z.B. Nova NanoSEM 230 der Firma FEI) konnten Details der Primärpartikelform bis in die Größenordnung von 0,01 µm sichtbar gemacht werden. Neben eckig bzw. splittrig vorliegenden Partikeln konnte eine Vielzahl kugelförmiger Partikel identifiziert werden, die einen geringen Grad an Agglomeration und/oder Verwachsungen miteinander aufwiesen.

Die mit REM-Aufnahmen bestimmbare (durch grafische Auswertung) durchschnittliche Primärpartikelgröße der kugelförmigen Partikel kann zwischen 0,01 µm und 10 µm, insbesondere zwischen 0,02 µm und 5 µm, besonders bevorzugt zwischen 0,02 µm und 2 µm betragen. Durch die im Rasterelektronenmikroskop integrierte EDX-Einheit kann mittels energiedispersiver Röntgenanalyse die Elementarzusammensetzung der kugelförmigen Partikel bestimmt werden. Die Detektion der Sekundärelektronen erfolgte durch einen In-lens SE Detektor (TLD-SE). Die energiedispersive Röntgenanalyse wurde mit einem System der Firma EDAX durchgeführt). Im Zuge dieser Untersuchung konnte festgestellt werden, dass ein Großteil der kugelförmig vorliegenden Partikel aus Aluminiumsilikat besteht.

Die Erfinder vermuten, ohne an die Theorie gebunden sein zu wollen, dass diese kugelförmigen Aluminiumsilikat-Partikel amorph sind und dass das Vorhandensein solcher Partikel in der Formstoffmischung sich vorteilhaft auf die Verdichtung dieser sowie auf die Oberflächengüte des entsprechenden Gussstücks auswirkt. Dies ist sowohl beim Eisen- und Stahlguss, als auch beim Aluminiumguss zu beobachten, daher ist die Verwendung dieses aluminiumoxid- und zirkoniumoxid-haltigen Staubs aus der Zirkonkorund-Herstellung besonders bevorzugt

Das erfindungsgemäße partikuläre gemischte Metalloxid in Bezug auf den Anteil der Oxide oder Mischoxide die zumindest ein Oxid des Aluminiums und zumindest ein Oxid des Zirkoniums umfassen ist zwischen 0,05 Gew.% und 2,0 Gew.%, vorzugsweise zwischen 0,1 Gew.% und 2,0 Gew.%,
besonders bevorzugt zwischen 0,1 Gew.% und 1,5 Gew.% und insbesondere bevorzugt zwischen 0,2 Gew.% und 1,2 Gew.% oder sogar zwischen 0,2 Gew.% und 0,8 Gew.%, in der Formstoffzusammensetzung enthalten, jeweils bezogen auf den Formgrundstoff, bzw. wird in obigen Anteilen der Formstoffzusammensetzung zugegeben.

In einer weiteren, bevorzugten Ausführungsform kann der erfindungsgemäßen Formstoffmischung ein Anteil eines partikulären amorphen SiO₂ zugesetzt sein, um das Festigkeitsniveau der mit solchen Formstoffmischungen hergestellten Gießformen zu erhöhen. Eine Steigerung der Festigkeiten der Gießformen, insbesondere die Steigerung der Heißfestigkeiten, kann im automatisierten Fertigungsprozess vorteilhaft sein. Das teilchenförmige amorphe Siliziumdioxid hat eine Teilchengröße von vorzugsweise weniger als 300 µm, bevorzugt weniger als 200 µm, insbesondere bevorzugt weniger als 100 µm und weist z.B. eine mittlere Primärpartikelgröße zwischen 0,05 µm und 10 µm auf. Die Teilchengröße lässt sich durch Siebanalyse bestimmen. Besonders bevorzugt beträgt der Siebrückstand auf einem Sieb mit einer Maschenweite von 63 µm weniger als 10 Gew.-%, vorzugsweise weniger als 8 Gew.%.

Die Bestimmung der Teilchengröße bzw. des Siebrückstandes erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird. Die Primärpartikelgröße wird durch dynamische Lichtstreuung bestimmt und kann durch REM geprüft werden.

Das partikuläre amorphe Siliziumdioxid kann als Teil des partikulären gemischten Metalloxids hinzugegeben werden oder separat. In jedem Fall sind die hier gemachten Angaben zur Konzentration des partikulären gemischten Metalloxids und des partikulären amorphen Siliziumdioxids jeweils ohne die andere(n) Komponente(n) zu verstehen. Im Zweifel muss die Komponente heraus gerechnet werden.

Das nach der vorliegenden Erfindung vorzugsweise eingesetzte amorphe SiO₂ hat einen Wassergehalt von kleiner 15 Gew.%, insbesondere kleiner 5 Gew.% und besonders bevorzugt von kleiner 1 Gew.%. Insbesondere wird das amorphe SiO₂ als Pulver eingesetzt.

Als amorphes SiO₂ können sowohl synthetisch hergestellte als auch natürlich vorkommende Kieselsäuren eingesetzt werden. Letztere, bekannt z.B. aus DE 102007045649, sind aber nicht bevorzugt, da sie i.d.R. nicht unerhebliche kristalline Anteile enthalten und deshalb als karzinogen eingestuft sind. Unter *synthetisch* wird nicht natürlich vorkommendes amorphes SiO₂ verstanden, d.h. dessen Herstellung umfasst eine chemische Reaktion, z.B. die Herstellung von Kieselsolen durch lonenaustauschprozesse aus Alkalisilikatlösungen, die Ausfällung aus Alkalisilikatlösungen, die Flammhydrolyse von Siliziumtetrachlorid, die Reduktion von Quarzsand mit Koks im Lichtbogenofen bei der Herstellung von FerroSilizium und Silizium. Das nach den beiden letztgenannten Verfahren hergestellte amorphe SiO₂ wird auch als pyrogenes SiO₂ bezeichnet.

Gelegentlich wird unter synthetischem amorphem SiO₂ nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilizium- bzw. Siliziumherstellung entstandene Produkt lediglich als amorphes SiO₂ (Silica Fume, Microsilica, CAS-Nr. 69012-64-12) bezeichnet wird. Für die Zwecke der vorliegenden Erfindung wird auch das bei der Ferrosilizium- bzw. Siliziumherstellung entstandene Produkt als synthetisches amorphes SiO₂ verstanden.

Bevorzugt eingesetzt werden Fällungskieselsäuren und pyrogenes, d.h. flammhydrolytisch oder im Lichtbogen hergestelltes SiO₂. Insbesondere bevorzugt eingesetzt werden durch thermische Zersetzung von ZrSiO₄ hergestelltes amorphes SiO₂ (siehe DE 102012020509, der Anteil an Zirkonium wird als ZiO₂ dem partikulären gemischten Metalloxid zugeschlagen, der andere Anteil dem amorphen Silizuimdioxid) sowie durch Oxidation von metallischem Si mittels eines sauerstoffhaltigen Gases hergestelltes SiO₂ (siehe DE 102012020510). Bevorzugt ist auch Quarzglaspulver (hauptsächlich amorphes SiO₂), das durch Schmelzen und rasches Wiederabkühlen aus kristallinem Quarz hergestellt wurde, so dass die Partikel kugelförmig und nicht splittrig vorliegen (siehe DE 102012020511). Die durchschnittliche Primärpartikelgröße des synthetischen amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden.

Des Weiteren konnten mit Hilfe der REM-Aufnahmen Details der Primärpartikelform bis in die Größenordnung von 0,01 µm sichtbar gemacht werden. Die SiO₂-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des synthetisch amorphen Siliziumdioxids mithilfe von Gasadsorptionsmessungen (BET-Verfahren) nach DIN 66131 bestimmt. Die spezifische Oberfläche des synthetisch amorphen SiO₂ liegt zwischen 1 und 200 m²/g, insbesondere zwischen 1 und 50 m²/g, besonders bevorzugt zwischen 1 und 30 m²/g. Ggfs. können die Produkte auch gemischt werden, z.B. um gezielt Mischungen mit bestimmten Partikelgrößenverteilungen zu erhalten.

Je nach Herstellungsart und Produzent kann die Reinheit des amorphen SiO₂ stark variieren. Als geeignet haben sich Typen mit einem Gehalt von mindestens 85 Gew.% SiO₂ erwiesen, bevorzugt von mindestens 90 Gew.% und besonders bevorzugt von mindestens 95 Gew.%. Je nach Anwendung und gewünschtem Festigkeitsniveau werden zwischen 0,1 Gew.% und 2 Gew.% des teilchenförmigen amorphen SiO₂ eingesetzt, vorzugsweise zwischen 0,1 Gew.% und 1,8 Gew.%, besonders bevorzugt zwischen 0,1 Gew.% und 1,5 Gew.%, jeweils bezogen auf den Formgrundstoff.

Das Verhältnis von Wasserglasbinder zu partikulärem gemischten Metalloxid und soweit vorhanden amorphem SiO₂ kann innerhalb weiter Grenzen variiert werden. Dies bietet den Vorteil, die Anfangsfestigkeiten der Kerne, d.h. die Festigkeit unmittelbar nach der Entnahme aus dem Werkzeug, stark zu verbessern, ohne die Endfestigkeiten wesentlich zu beeinflussen. Dies ist vor allem im Leichtmetallguss von großem Interesse. Auf der einen Seite sind hohe Anfangsfestigkeiten erwünscht, um die Kerne nach ihrer Herstellung problemlos transportieren oder zu ganzen Kernpaketen zusammensetzen zu können, auf der anderen Seite sollten die Endfestigkeiten nicht zu hoch sein, um Schwierigkeiten beim Kernzerfall nach dem Abguss zu vermeiden, d.h. der Formgrundstoff sollte nach dem Gießen problemlos aus Hohlräumen der Gussform entfernt werden können.

Bezogen auf das Gewicht des Bindemittels (einschließlich Verdünnungs- bzw. Lösungsmittel) ist das amorphe SiO₂ vorzugsweise in einem Anteil von 2 bis 60 Gew.% enthalten, besonders bevorzugt von 3 bis 55 Gew.% und insbesondere bevorzugt zwischen 4 bis 50 Gew.%, bzw. besonders bevorzugt bezogen auf das Verhältnis Feststoffanteil des Wasserglases zu amorphem SiO₂ von 10 : 1 bis 1 : 1,2 (Gewichtsteile).

Die Zugabe des amorphen SiO₂ kann gemäß EP 1802409 B1 sowohl vor als auch nach der Binderzugabe direkt zum Feuerfeststoff erfolgen, es kann aber auch, wie in EP 1884300 A1 (= US 2008/029240 A1) beschrieben, zuerst eine Vormischung des SiO₂ mit zumindest einem Teil des Binders oder Natronlauge hergestellt und diese dann dem Feuerfeststoff zugemischt werden. Der ggf. noch vorhandene, nicht für die Vormischung verwendete Binder bzw. Binderanteil kann dem Feuerfeststoff vor oder nach der Zugabe der Vormischung oder zusammen mit dieser zugegeben werden. Vorzugsweise ist das amorphe SiO₂ dem Feuerfeststoff vor der Binderzugabe zugegeben.

In einer weiteren Ausführungsform kann der Formstoffmischung Bariumsulfat zugesetzt sein (DE 102012104934), um die Oberfläche des Gussstücks weiter zu verbessern, insbesondere im Leichtmetallguss, wie dem Aluminiumguss. Das Bariumsulfat kann synthetisch hergestelltes als auch natürliches Bariumsulfat sein, d.h. in Form von Mineralien hinzugefügt sein, die Bariumsulfat enthalten, wie Schwerspat bzw. Baryt.

Synthetisch hergestelltes Bariumsulfat (auch Blanc Fixe genannt) wird beispielsweise mithilfe einer Fällungsreaktion hergestellt. Zu diesem Zweck werden meist leicht lösliche Bariumverbindungen (Bariumsalze) in Wasser gelöst. Anschließend wird durch Zugabe von leicht löslichen Sulfat-Salzen (wie z.B. Natriumsulfat) oder auch Schwefelsäure das schwerlösliche Bariumsulfat gefällt. Das gefällte Bariumsulfat wird abfiltriert, getrocknet und evtl. gemahlen.

Natürliches Bariumsulfat wird als Roherz gewonnen und anschließend durch verschiedene Methoden aufgearbeitet (z.B. Dichtesortierung, Vermahlung usw.). Bevorzugt hat das Bariumsulfat eine Reinheit von mehr als 85 Gew.%, besonders bevorzugt von mehr als 90 Gew.%.

Das natürlich gewonnene Bariumsulfat kann beispielsweise eine Verunreinigung von Calciumfluorid enthalten. Der Anteil des Calciumfluorids kann typischerweise bei etwa 5% bezogen auf das Gesamtgewicht des natürlichen Bariumsulfats liegen.

Die durchschnittliche Teilchengröße des erfindungsgemäß einzusetzenden Bariumsulfats liegt vorzugsweise zwischen 0,1 µm und 90 µm. Die Partikelgrößenverteilung lässt sich beispielsweise mit Hilfe von dynamischer Lichtstreuung (z.B. Horiba LA 950) bestimmen. Bevorzugt beträgt der Siebrückstand auf einem Sieb mit der Maschenweite von 45 µm weniger als 20 Gew.%, besonders bevorzugt weniger als 10 Gew.%, insbesondere bevorzugt weniger als 5 Gew.%. Die Bestimmung des Siebrückstands erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird.

Das Bariumsulfat wird bevorzugt in einer Menge von 0,02 bis 5,0 Gew.%, besonders bevorzugt 0,05 bis 3,0 Gew.%, insbesondere bevorzugt 0,1 bis 2,0 Gew.% oder 0,3 bis 0,99 Gew.%, jeweils bezogen die gesamte Formstoffmischung, zugegeben.

Gemäß einer weiteren Ausführungsform können der erfindungsgemäßen Formstoffmischung auch andere Stoffe zugesetzt werden, die sich durch eine geringe Benetzung mit geschmolzenem Aluminium auszeichnen, wie z.B. Bornitrid.

Eine solche Mischung von wenig benetzenden Stoffen, die u. a. Bariumsulfat als wenig benetzendes Mittel enthält, kann ebenfalls zu einer glatten, sandanhaftungsfreien Gussoberfläche führen. Bezogen auf die Gesamtmenge nicht/wenig benetzender Stoffe sollte der Anteil des Bariumsulfats größer als 5 Gew%, bevorzugt größer als 10 Gew%, insbesondere bevorzugt größer als 20 Gew% oder größer 60 Gew.% sein.

Die Obergrenze stellt reines Bariumsulfat dar - der Anteil des Bariumsulfats an nichtbenetzenden Mitteln ist in diesem Fall 100 Gew%. Die Mischung nicht/wenig benetzender Stoffe wird bevorzugt in einer Menge von 0,02 bis 5,0 Gew.%, besonders bevorzugt 0,05 bis 3,0 Gew.%, insbesondere bevorzugt 0,1 bis 2,0 Gew.% oder 0,3 bis 0,99 Gew.%, jeweils bezogen auf die Formstoffmischung, zugegeben.

In einer weiteren Ausführungsform kann die erfindungsgemäße Formstoffmischung eine phosphorhaltige Verbindung umfassen. Dieser Zusatz ist bei sehr dünnwandigen Abschnitten einer Gießform bevorzugt. Es handelt sich dabei bevorzugt um anorganische Phosphorverbindungen, in denen der Phosphor bevorzugt in der Oxidationsstufe +5 vorliegt. Durch den Zusatz phosphorhaltiger Verbindungen kann die Stabilität der Gießform weiter gesteigert werden. Dies ist insbesondere von Bedeutung, wenn beim Metallguss das flüssige Metall auf eine schräge Fläche trifft und dort wegen des hohen metallostatischen Drucks eine hohe Erosionswirkung ausübt bzw. zu Verformungen insbesondere dünnwandiger Abschnitte der Gießform führen kann.

Die phosphorhaltige Verbindung liegt bevorzugt in Form eines Phosphats oder Phosphoroxids vor. Das Phosphat kann dabei als Alkali- bzw. als Erdalkalimetallphosphat vorliegen, wobei Alkalimetallphosphate und hierbei insbesondere die Natriumsalze besonders bevorzugt sind.

Prinzipiell können auch Ammoniumphosphate oder Phosphate anderer Metallionen verwendet werden. Die als bevorzugt genannten Alkali- bzw. Erdalkalimetallphosphate sind allerdings leicht zugänglich und in an sich beliebigen Mengen kostengünstig verfügbar. Phosphate mehrwertiger Metallionen, insbesondere dreiwertiger Metallionen, sind nicht bevorzugt. Es wurde beobachtet, dass sich bei Verwendung derartiger Phosphate mehrwertiger Metallionen, insbesondere dreiwertiger Metallionen, die Verarbeitungszeit der Formstoffmischung verkürzt. Wird die phosphorhaltige Verbindung der Formstoffmischung in Form eines Phosphoroxids zugesetzt, liegt das Phosphoroxid bevorzugt in Form von Phosphorpentoxid vor. Es können jedoch auch Phosphortri- und Phosphortetroxid Verwendung finden.

Als Phosphate können sowohl Orthophosphate als auch Polyphosphate, Pyrophosphate oder Metaphosphate eingesetzt werden. Die Phosphate können beispielsweise durch Neutralisation der entsprechenden Säuren mit einer entsprechenden Base, beispielsweise einer Alkalimetallbase, wie NaOH, oder ggf. auch einer Erdalkalimetallbase hergestellt werden, wobei nicht notwendigerweise alle negativen Ladungen des Phophats durch Metallionen abgesättigt sein müssen. Es können sowohl die Metallphosphate als auch die Metallhydrogenphosphate sowie die Metalldihydrogenphosphate eingesetzt werden, wie beispielsweise Na₃PO₄, Na₂HPO₄, und NaH₂PO₄. Ebenso können die wasserfreien Phosphate wie auch Hydrate der Phosphate eingesetzt werden. Die Phosphate können sowohl in kristalliner als auch in amorpher Form in die Formstoffmischung eingebracht sein.

Unter Polyphosphaten werden insbesondere lineare Phosphate verstanden, die mehr als ein Phosphoratom umfassen, wobei die Phosphoratome jeweils über Sauerstoffbrücken miteinander verbunden sind. Polyphosphate werden durch Kondensation von Orthophosphationen unter Wasserabspaltung erhalten, sodass eine lineare Kette von P04-Tetraedern erhalten wird, die jeweils über Ecken verbunden sind. Polyphosphate weisen die allgemeine Formel (O(PO₃)n)⁽ⁿ⁺²⁾⁻ auf, wobei n der Kettenlänge entspricht. Ein Polyphosphat kann bis zu mehreren hundert PO₄-Tetraedern umfassen. Bevorzugt werden jedoch Polyphosphate mit kürzeren Kettenlängen eingesetzt. Bevorzugt weist n Werte von 2 bis 100, insbesondere bevorzugt 5 bis 50 auf. Es können auch höher kondensierte Polyphosphate verwendet werden, d.h. Polyphosphate, in welchen die P04-Tetraeder über mehr als zwei Ecken miteinander verbunden sind und daher eine Polymerisation in zwei bzw. drei Dimensionen zeigen.

Über Metaphosphate werden zyklische Strukturen verstanden, die aus PO₄-Tetraedern aufgebaut sind, die jeweils über Ecken miteinander verbunden sind. Metaphosphate weisen die allgemeine Formel ((PO₃)n)ⁿ⁻ auf, wobei n mindestens 3 beträgt. Bevorzugt weist n Werte von 3 bis 10 auf.

Es können sowohl einzelne Phosphate verwendet werden als auch Gemische aus verschiedenen Phosphaten und/oder Phosphoroxiden.

Der bevorzugte Anteil der phosphorhaltigen Verbindung, bezogen auf den feuerfesten Formgrundstoff, beträgt zwischen 0,05 und 1,0 Gew.-%. Bei einem Anteil von weniger als 0,05 Gew.% ist kein deutlicher Einfluss auf die Formbeständigkeit der Gießform festzustellen. Übersteigt der Anteil des Phosphats 1,0 Gew.%, nimmt die Heißfestigkeit der Gießform stark ab. Bevorzugt wird der Anteil der phosphorhaltigen Verbindung zwischen 0,1 und 0,5 Gew.% gewählt. Die phosphorhaltige, anorganische Verbindung enthält bevorzugt zwischen 40 und 90 Gew.%, insbesondere bevorzugt zwischen 50 und 80 Gew.% Phosphor, berechnet als P₂O₅. Die phosphorhaltige Verbindung kann an sich in fester oder gelöster Form der Formstoffmischung zugesetzt sein. Bevorzugt ist die phosphorhaltige Verbindung der Formstoffmischung als Feststoff zugesetzt. Wird die phosphorhaltige Verbindung in gelöster Form zugegeben, ist Wasser als Lösungsmittel bevorzugt.

Als weiterer Vorteil eines Zusatzes phosphorhaltiger Verbindungen zu Formstoffmischungen zur Herstellung von Gießformen wurde gefunden, dass die Formen nach dem Metallguss einen sehr guten Zerfall zeigen. Dies trifft für Metalle zu, die niedrigere Gießtemperaturen benötigen, wie Leichtmetalle, insbesondere Aluminium. Beim Eisenguss wirken höhere Temperaturen von mehr als 1200 °C auf die Gießform ein, sodass eine erhöhte Gefahr eines Verglasens der Gießform und damit einer Verschlechterung der Zerfallseigenschaften besteht.

In einer weiteren Ausführungsform können der erfindungsgemäßen Formstoffmischung organische Verbindungen (gemäß EP 1 802 409 B1 und WO 2008/046651) zugesetzt sein. Ein geringer Zusatz von organischen Verbindungen kann für spezielle Anwendungen vorteilhaft sein - beispielsweise, um die thermische Ausdehnung der ausgehärteten Formstoffmischung zu regulieren. Allerdings ist ein solcher Zusatz nicht bevorzugt, da dies wiederum mit Emissionen von CO₂ und anderen Pyrolyseprodukten verbunden ist.

Bindemittel, welche Wasser enthalten, weisen im Vergleich zu Bindemitteln auf Basis organischer Lösungsmittel i.A. eine schlechtere Fließfähigkeit auf. Dies bedeutet, dass sich Formwerkzeuge mit engen Durchgängen und mehreren Umlenkungen schlechter füllen lassen.

Als Folge davon können die Kerne Abschnitte mit ungenügender Verdichtung besitzen, was wiederum beim Abguss zu Gussfehlern führen kann. Gemäß einer vorteilhaften Ausführungsform enthält die erfindungsgemäße Formstoffmischung einen Anteil an plättchenförmigen Schmiermitteln, insbesondere Grafit oder MoS₂. Überraschend hat sich gezeigt, dass bei einem Zusatz derartiger Schmiermittel, insbesondere von Grafit, auch komplexe Formen mit dünnwandigen Abschnitten hergestellt werden können, wobei die Gießformen durchgängig eine gleichmäßig hohe Dichte und Festigkeit aufweisen, so dass beim Gießen im Wesentlichen keine Gussfehler beobachtet wurden. Die Menge des zugesetzten plättchenförmigen Schmiermittels, insbesondere Grafits, beträgt vorzugsweise 0,05 bis 1 Gew.%, besonders bevorzugt 0,05 bis 0,5 Gew.%, bezogen auf den Formgrundstoff.

Auch sind oberflächenaktive Substanzen einsetzbar, insbesondere Tenside, um die Fließfähigkeit der Formstoffmischung verbessern. Geeignete Vertreter dieser Verbindungen sind z.B. in WO 2009/056320 (= US 2010/0326620 A1) beschrieben. Genannt seien hier insbesondere Tenside mit Schwefelsäure- oder Sulfonsäure-Gruppen.

Unter einem oberflächenaktiven Stoff wird ein Stoff verstanden, welcher auf einer wässrigen Oberfläche eine monomolekulare Schicht ausbilden kann, also beispielsweise zur Ausbildung einer Membran befähigt ist. Femer wird durch einen oberflächenaktiven Stoff die Oberflächenspannung von Wasser herabgesetzt. Geeignete oberflächenaktive Stoffe sind beispielsweise Silikonöle.

Besonders bevorzugt ist der oberflächenaktive Stoff ein Tensid. Tenside umfassen einen hydrophilen Teil (Kopf) und einen langen hydrophoben Teil (Schwanz), welche in ihren Eigenschaften so ausgewogen sind, dass die Tenside in einer wässrigen Phase beispielsweise Micellen ausbilden oder sich an der Grenzfläche anreichern können.

Es können an sich alle Klassen von Tensiden in der erfindungsgemäßen Formstoffmischung eingesetzt werden. Geeignet sind neben anionischen Tensiden auch nichtionische Tenside, kationische Tenside sowie amphotere Tenside.

Beispielhafte nichtionische Tenside sind beispielsweise ethoxylierte oder propoxylierte langkettige Alkohole, Amine oder Säuren, wie Fettalkoholethoxylate, Alkylphenolethoxylate, Fettaminethoxylate, Fettsäureethoxylate, die entsprechenden Propoxylate oder auch Zuckertenside, wie beispielsweise Polyglykoside auf Fettalkoholbasis. Die Fettalkohole umfassen bevorzugt 8 bis 20 Kohlenstoffatome. Geeignete kationische Tenside sind Alkylammoniumverbindungen und Imidazoliniumverbindungen.

Bevorzugt werden anionische Tenside für die erfindungsgemäße Formstoffmischung verwendet. Das anionische Tensid umfasst als polare, hydrophile Gruppe bevorzugt eine Sulfat-, Sulfonat-, Phosphat- oder Carboxylatgruppe, wobei Sulfat- und Phosphatgruppen besonders bevorzugt sind. Werden sulfatgruppenhaltige anionische Tenside verwendet, so werden bevorzugt die Monoester der Schwefelsäure eingesetzt. Werden Phosphatgruppen als polare Gruppe des anionischen Tensids verwendet, so sind die Mono- und Diester der Orthophosphorsäure besonders bevorzugt.

Gemeinsam ist den in der erfindungsgemäßen Formstoffmischung verwendeten Tensiden, dass der unpolare, hydrophobe Abschnitt (Schwanz) bevorzugt von Alkyl-, Aryl- und/oder Aralkylgruppen gebildet wird, die bevorzugt mehr als 6 Kohlenstoffatome, besonders bevorzugt 8 bis 20 Kohlenstoffatome umfassen. Der hydrophobe Abschnitt kann sowohl lineare Ketten als auch verzweigte Strukturen aufweisen. Ebenfalls können Mischungen verschiedener Tenside eingesetzt werden. Besonders bevorzugte anionische Tenside sind ausgewählt aus der Gruppe von Oleylsulfat, Stearylsulfat, Palmitylsulfat, Myristylsulfat, Laurylsulfat, Decylsulfat, Octylsulfat, 2-Ethylhexylsulfat, 2-Ethyloctylsulfat, 2-Ethyldecylsulfat, Palmitoleylsulfat, Linolylsulfat, Laurylsulfonat, 2-Ethyldecylsulfonat, Palmitylsulfonat, Stearylsulfonat, 2-Ethylstearylsulfonat, Linolylsulfonat, Hexylphosphat, 2-Ethylhexylphosphat, Caprylphosphat, Laurylphosphat, Myristylphosphat, Palmitylphosphat, Palmitoleylphosphat, Oleylphosphat, Stearylphosphat, Poly-(1,2-ethandiyl-)-Phenolhydroxiphosphat, Poly-(1,2-*ethandiyl-)-Stearylphosphat, sowie Poly-(1,2-ethandiyl-)-Oleylphosphat.*

In der erfindungsgemäßen Formstoffmischung ist der reine oberflächenaktive Stoff bezogen auf das Gewicht des feuerfesten Formgrundstoffs bevorzugt in einem Anteil von 0,001 bis 1 Gew.-%, besonders bevorzugt 0,01 bis 0,2 Gew.-% enthalten. Häufig werden derartige oberflächenaktive Stoffe kommerziell als 20 bis 80%ige Lösung angeboten. In diesem Fall sind insbesondere die wässrigen Lösungen der oberflächenaktiven Stoffe bevorzugt.

Im Prinzip kann der oberflächenaktive Stoff sowohl in gelöster Form, beispielsweise im Binder, als separate Komponente oder aber über eine Feststoffkomponente, die als Trägermaterial fungiert, beispielsweise in einem Additiv, der Formstoffmischung zugesetzt werden. Besonders bevorzugt ist der oberflächenaktive Stoff im Binder gelöst.

Neben den genannten Bestandteilen kann die erfindungsgemäße Formstoffmischung noch weitere Zusätze umfassen. Beispielsweise können interne Trennmittel zugesetzt werden, welche die Ablösung der Gießformen aus dem Formwerkzeug erleichtern. Geeignete interne Trennmittel sind z.B. Calciumstearat, Fettsäureester, Wachse, Naturharze oder spezielle Alkydharze.

Weiter können auch Silane zur erfindungsgemäßen Formstoffmischung gegeben werden, um die Beständigkeit der Formen und Kerne gegenüber hoher Luftfeuchtigkeit und/oder gegenüber Formstoffüberzügen auf Wasserbasis zu erhöhen. Gemäß einer weiteren bevorzugten Ausführungsform enthält die erfindungsgemäße Formstoffmischung einen Anteil zumindest eines Silans. Geeignete Silane sind beispielsweise Aminosilane, Epoxysilane, Mercaptosilane, Hydroxysilane und Ureidosilane. Beispiele für geeignete Silane sind Aminopropyltrimethoxysilan, Hydroxypropyltrimethoxysilan, 3-Ureidopropyltriethoxysilan, Mercaptopropyltrimethoxysilan, Glycidoxypropyltrimethoxysilan, (3,4-Epoxycyclohexyl)trimethoxysilan und N-(Aminoethyl)-aminopropyltrimethoxysilan. Bezogen auf das Bindemittel werden typischerweise 0,1 bis 2 Gew.% Silan eingesetzt, vorzugsweise 0,1 bis 1 Gew.%. Weitere geeignete Additive sind Alkalimetallsilikonate, z.B. Kaliummethylsilikonat, von denen 0,5 bis 15 Gew.%, vorzugsweise 1 bis 10 Gew.% und besonders bevorzugt 1 bis 5 Gew.% bezogen auf das Bindemittel eingesetzt werden können. Enthält die Formstoffmischung Silane und/oder Alkalimethylsilikonate, so erfolgt deren Zugabe üblicherweise in der Form, dass sie vorab in das Bindemittel eingearbeitet werden. Sie können dem Formstoff aber auch als getrennte Komponente zugegeben werden.

Die erfindungsgemäße Formstoffmischung stellt eine intensive Mischung aus zumindest den genannten Bestandteilen dar. Dabei sind die Teilchen des feuerfesten Formgrundstoffs vorzugsweise mit einer Schicht des Bindemittels überzogen. Durch Verdampfen des im Bindemittel vorhandenen Wassers (ca. 40-70 Gew.%, bezogen auf das Gewicht des Bindemittels) kann dann ein fester Zusammenhalt zwischen den Teilchen des feuerfesten Formgrundstoffs erreicht werden.

Trotz der mit dem erfindungsgemäßen Bindemittelsystem erreichbaren hohen Festigkeiten zeigen die mit der erfindungsgemäßen Formstoffmischung hergestellten Gießformen nach dem Abguss überraschenderweise einen guten Zerfall, sodass sich die Formstoffmischung nach dem Guss auch aus engen und verwinkelten Abschnitten der Gießform wieder ausgießen lässt. Die aus den erfindungsgemäßen Formstoffmischungen hergestellten Formkörper eignen sich generell zum Gießen von Metallen, wie beispielsweise Leichtmetalle, Buntmetalle oder Eisenmetalle. Besonders bevorzugt eignet sich die erfindungsgemäße Formstoffmischung allerdings für das Gießen von Eisenmetallen.

Die Erfindung betrifft weiter ein Verfahren zur Herstellung von Gießformen für die Metallverarbeitung, wobei die erfindungsgemäße Formstoffmischung verwendet wird. Das erfindungsgemäße Verfahren umfasst die Schritte:
- Bereitstellen der oben beschriebenen Formstoffmischung;
- Formen der Formstoffmischung;
- Aushärten der geformten Formstoffmischung, wobei die ausgehärtete Gießform erhalten wird.

Vorzugsweise wird die Formstoffmischung in Form eines Mehrkomponenten¬-Systems bereitgestellt umfassend zumindest die folgenden räumlich separat voneinander vorliegenden Komponenten (A), (B) und ggf. (F):
(A) eine pulverförmige Additiv-Komponente umfassend zumindest
   - ein partikuläres gemischtes Metalloxid, wobei das gemischte partikuläre Metalloxid
      - zumindest ein partikuläres Mischoxid oder
      - eine partikuläre Mischung von zumindest zwei Oxiden ist oder
      - zumindest ein partikuläres Mischoxid neben zumindest einem weiteren partikulären Oxid oder neben zumindest einem weiteren anderen partikulären Mischoxid vorliegt,
      und das partikuläre gemischte Metalloxid zumindest ein Oxid des Aluminiums und zumindest ein Oxid des Zirkoniums umfasst, und
   - kein Wasserglas; und
(B) eine flüssige Binder-Komponente (B) umfassend zumindest
   - Wasserglas enthaltend Wasser; und ggf.
(F) eine rieselfähige Feuerfest-Komponente (F) umfassend
   - einen feuerfesten Formgrundstoff und
   - kein Wasserglas.

Die weiteren Bestandteile der Komponenten sind jeweils weiter vorne näher definiert. Im Einzelnen sind die weiter vorne genannten weiteren Bestandteile den Komponenten (A), (B) und (F) vorzugsweise wie folgt zuzuordnen:
Komponente (A) (Additiv-Komponente): partikuläres amorphes SiO₂, Bariumsulfat, phosphorhaltige Verbindung (als Feststoff), organische Verbindungen;
Komponente (B) (Binder-Komponente): Tenside; phosphorhaltige Verbindung (soweit wasserlöslich);
Komponente (F) (Feuerfest-Komponente): künstliche Formstoffe.

Mit dem Mehrkomponenten¬,-System sind die Formstoffmischungen durch Zusammenbringen der Komponenten in den hierfür erforderlichen Mengen herstellbar bzw. durch Bereitstellen der Komponente mit den hierfür erforderlichen Mengen der oben näher definierten Bestandteile.

Bei der Herstellung der erfindungsgemäßen Formstoffmischung wird im Allgemeinen so vorgegangen, dass zunächst der feuerfeste Formgrundstoff vorgelegt und dann unter Rühren das Bindemittel zugegeben wird. Dabei kann das Wasserglas sowie das erfindungsgemäße partikuläre gemischte Metalloxid an sich in beliebiger Reihenfolge zugegeben werden.

Die oben beschriebenen Additive können an sich in jeglicher Form der Formstoffmischung zugesetzt werden. Sie können einzeln oder auch als Mischung zudosiert werden. Gemäß einer bevorzugten Ausführungsform wird das Bindemittel als Zwei-Komponenten-System bereitgestellt, wobei eine erste flüssige Komponente das Wasserglas und ggf. ein Tensid (siehe oben) enthält und eine zweite feste Komponente das erfindungsgemäße partikuläre gemischte Metalloxid umfasst neben ggf. einer oder mehrerer der oben beschriebenen Komponenten: synthetisches amorphes Siliziumdioxid, Kohlenhydrat, Phosphate, einen vorzugsweise plättchenförmigen Schmierstoff und/oder Bariumsulfat, insbesondere synthetisches amorphes Siliziumdioxid.

Bei der Herstellung der Formstoffmischung wird der feuerfeste Formgrundstoff in einem Mischer vorgelegt und dann bevorzugt zunächst die feste(n) Komponente(n) in Form der partikulären gemischten Metalloxide, sowie ggf. des amorphen Siliziumdioxids, des Bariumsulfats oder weiter pulverförmiger Feststoffe zugegeben und mit dem feuerfesten Formgrundstoff vermischt.

Die Mischdauer wird so gewählt, dass eine innige Durchmischung von feuerfestem Formgrundstoff und zugegebenem Feststoff erfolgt. Die Mischdauer ist abhängig von der Menge der herzustellenden Formstoffmischung sowie von dem verwendeten Mischaggregat. Bevorzugt wird die Mischdauer zwischen 1 und 5 Minuten gewählt. Unter bevorzugt weiterem Bewegen der Mischung wird dann die flüssige Komponente des Bindemittels zugegeben und dann die Mischung solange weiter vermischt, bis sich auf den Körnern des feuerfesten Formgrundstoffs eine gleichmäßige Schicht des Bindemittels ausgebildet hat. Auch hier ist die Mischdauer von der Menge der herzustellenden Formstoffmischung sowie vom verwendeten Mischaggregat abhängig. Bevorzugt wird die Dauer für den Mischvorgang zwischen 1 und 5 Minuten gewählt. Unter einer flüssigen Komponente wird sowohl eine Mischung verschiedener flüssiger Komponenten als auch die Gesamtheit aller flüssigen Einzelkomponenten verstanden, wobei letztere auch einzeln zugegeben werden können. Ebenso wird unter einer festen Komponente sowohl das Gemisch einzelner oder aller der oben beschriebenen festen Komponenten als auch die Gesamtheit aller fester Einzelkomponenten verstanden, wobei letztere gemeinsam oder auch nacheinander zur Formstoffmischung gegeben werden können. Gemäß einer anderen Ausführungsform kann auch zunächst die flüssige Komponente des Bindemittels zum feuerfesten Formgrundstoff gegeben werden und erst dann die feste Komponente der Mischung zugeführt werden. Gemäß einer weiteren Ausführungsform wird zunächst 0,05 bis 0,3% Wasser, bezogen auf das Gewicht des Formgrundstoffes, zum feuerfesten Formgrundstoff gegeben und erst anschließend die festen und flüssigen Komponenten des Bindemittels zugegeben.

Bei dieser Ausführungsform kann ein überraschender positiver Effekt auf die Verarbeitungszeit der Formstoffmischung erzielt werden. Die Erfinder nehmen an, dass die wasserentziehende Wirkung der festen Komponenten des Bindemittels auf diese Weise reduziert und der Aushärtevorgang dadurch verzögert wird. Die Formstoffmischung wird anschließend in die gewünschte Form gebracht. Dabei werden die für die Formgebung üblichen Verfahren verwendet. Beispielsweise kann die Formstoffmischung mittels einer Kernschießmaschine mit Hilfe von Druckluft in das Formwerkzeug geschossen werden. Die Formstoffmischung wird anschließend ausgehärtet, wobei alle Verfahren herangezogen werden können, die bei Bindemitteln auf der Basis von Wasserglas bekannt sind, z.B. Heißhärtung, Begasen mit CO₂ oder Luft bzw. einer Kombination von beidem sowie Härtung durch flüssige oder feste Katalysatoren.

Bevorzugt ist die Heißhärtung bei der die Formstoffmischung einer Temperatur von 100 °C bis 300, vorzugsweise 120 bis 250 °C ausgesetzt wird. Bei der Heißhärtung wird der Formstoffmischung Wasser entzogen. Dadurch werden vermutlich auch Kondensationsreaktionen zwischen Silanolgruppen initiiert, sodass eine Vernetzung des Wasserglases eintritt.

Das Erwärmen kann beispielsweise in einem Formwerkzeug erfolgen, das vorzugsweise eine Temperatur von 100 bis 300 °C, besonders bevorzugt eine Temperatur von 120 bis 250 °C aufweist. Es ist möglich, die Gießform bereits im Formwerkzeug vollständig auszuhärten. Es ist aber auch möglich, die Gießform nur in ihrem Randbereich auszuhärten, so dass sie eine ausreichende Festigkeit aufweist, um aus dem Formwerkzeug entnommen werden zu können. Die Gießform kann dann anschließend vollständig ausgehärtet werden, indem ihr weiteres Wasser entzogen wird. Dies kann beispielsweise in einem Ofen erfolgen. Der Wasserentzug kann beispielsweise auch erfolgen, indem das Wasser bei vermindertem Druck verdampft wird.

Die Aushärtung der Gießformen kann durch Einblasen von erhitzter Luft in das Formwerkzeug beschleunigt werden. Bei dieser Ausführungsform des Verfahrens wird ein rascher Abtransport des im Bindemittel enthaltenen Wassers erreicht, wodurch die Gießform in für eine industrielle Anwendung geeigneten Zeiträumen verfestigt wird. Die Temperatur der eingeblasenen Luft beträgt vorzugsweise 100 °C bis 180 °C, insbesondere bevorzugt 120 °C bis 150 °C.

Die Strömungsgeschwindigkeit der erhitzten Luft wird vorzugsweise so eingestellt, dass eine Aushärtung der Gießform in für eine industrielle Anwendung geeigneten Zeiträumen erfolgt. Die Zeiträume hängen von der Größe der hergestellten Gießformen ab. Angestrebt wird eine Aushärtung im Zeitraum von weniger als 5 Minuten, vorzugsweise weniger als 2 Minuten. Bei sehr großen Gießformen können jedoch auch längere Zeiträume erforderlich sein.

Die Entfernung des Wassers aus der Formstoffmischung kann auch in der Weise erfolgen, dass das Erwärmen der Formstoffmischung durch Einstrahlen von Mikrowellen bewirkt wird. Die Einstrahlung der Mikrowellen wird aber bevorzugt vorgenommen, nachdem die Gießform aus dem Formwerkzeug entnommen wurde.

Dazu muss die Gießform jedoch bereits eine ausreichende Festigkeit aufweisen. Wie bereits erläutert, kann dies beispielsweise dadurch bewirkt werden, dass zumindest eine äußere Schale der Gießform bereits im Formwerkzeug ausgehärtet wird.

Die erfindungsgemäßen Verfahren eignen sich an sich für die Herstellung aller für den Metallguss üblicher Gießformen, also beispielsweise von Kernen und Formen.

Die aus der erfindungsgemäßen Formstoffmischung bzw. mit dem erfindungsgemäßen Verfahren hergestellten Gießformen weisen eine hohe Festigkeit unmittelbar nach der Herstellung auf, ohne dass die Festigkeit der Gießformen nach dem Aushärten so hoch ist, dass Schwierigkeiten nach der Herstellung des Gussstücks beim Entfernen der Gießform auftreten. Weiterhin weisen diese Gießformen eine hohe Stabilität bei erhöhter Luftfeuchtigkeit auf, d.h. die Gießformen können überraschenderweise auch über längere Zeit hinweg problemlos gelagert werden. Als Vorteil weist die Gießform eine sehr hohe Stabilität bei mechanischer Belastung auf, sodass auch dünnwandige Abschnitte der Gießform verwirklicht werden können, ohne dass diese durch den metallostatischen Druck beim Gießvorgang deformiert werden. Ein weiterer Gegenstand der Erfindung ist daher eine Gießform, welche nach dem oben beschriebenen erfindungsgemäßen Verfahren erhalten wurde.

Im Weiteren wird die Erfindung anhand von Beispielen ohne auf diese beschränkt zu sein näher erläutert.

### Beispiele

### 1) Einfluss verschiedener aluminiumoxidhaltiger Pulver auf die Biegefestigkeiten und auf die Verarbeitungszeit

Für die Prüfung einer Formstoffmischung wurden sog. Georg-Fischer-Prüfriegel hergestellt. Unter Georg-Fischer-Prüfriegeln werden quaderförmige Prüfriegel mit den Abmessungen 150 mm x 22,36 mm x 22,36 mm verstanden. Die Zusammensetzungen der Formstoffmischungen sind in Tabelle 1 angegeben. Zur Herstellung der Georg-Fischer-Prüfriegel wurde wie folgt vorgegangen:
- Die in Tabelle 1 aufgeführten Komponenten wurden in einem Laborflügelmischer (Firma Vogel & Schemmann AG, Hagen, DE) gemischt. Dazu wurde zunächst der Quarzsand vorgelegt und unter Rühren das Wasserglas zugegeben.
- Als Wasserglas wurde ein Natriumwasserglas verwendet, das Anteile von Kalium aufwies. In den nachfolgenden Tabellen ist das Modul daher mit SiO₂:M₂O angegeben, wobei M die Summe aus Natrium und Kalium angibt. Nachdem die Mischung für eine Minute gerührt worden war, wurden ggf. amorphes SiO₂ und/oder Bariumsulfat unter weiterem Rühren hinzugegeben. Die Mischung wurde anschließend noch für eine weitere Minute gerührt.
- Die Formstoffmischungen wurden in den Vorratsbunker einer H 2,5 Hot-Box-Kernschießmaschine der Firma Röperwerk - Gießereimaschinen GmbH, Viersen, DE, überführt, deren Formwerkzeug auf 180 °C erwärmt war.
- Die Formstoffmischungen wurden mittels Druckluft (5 bar) in das Formwerkzeug eingebracht und verblieben für weitere 35 Sekunden im Formwerkzeug.
- Zur Beschleunigung der Aushärtung der Mischungen wurde während der letzten 20 Sekunden Heißluft (2 bar, 100 °C beim Eintritt in das Werkzeug) durch das Formwerkzeug geleitet.
- Das Formwerkzeug wurde geöffnet und die Prüfriegel entnommen.

Zur Bestimmung der Biegefestigkeiten wurden die Prüfriegel in ein Georg-Fischer-Festigkeitsprüfgerät, ausgerüstet mit einer 3-Punkt-Biegevorrichtung (DISA Industrie AG, Schaffhausen, CH) eingelegt und die Kraft gemessen, welche zum Bruch der Prüfriegel führte. Die Biegefestigkeiten wurden nach folgendem Schema gemessen:
- 10 Sekunden nach der Entnahme (Heißfestigkeiten)
- 1 Stunde nach Entnahme (Kaltfestigkeiten)
- 10 Sekunden nach der Entnahme (Heißfestigkeiten) der für 1h gelagerten (ohne Luftwechsel) Formstoffmischung.
- 10 Sekunden nach der Entnahme (Heißfestigkeiten) der für 2h gelagerten (ohne Luftwechsel) Formstoffmischung.

### Ergebnis

Ein Vergleich der Biegefestigkeiten der Mischungen 1.01 und 1.02 zeigt, dass sich sowohl die Heißfestigkeiten als auch die Kaltfestigkeiten durch die Zugabe eines amorphen SiO₂-Pulvers erhöhen. Dies steht im Einklang mit dem Stand der Technik wie er in DE 102004042535 A1 beschrieben wird.

Ein Vergleich der Mischung 1.02 mit den Mischungen 1.03 bis 1.09 weist eindeutig darauf hin, dass nicht-erfindungsgemäßes aluminiumoxidhaltiges Pulver zu schlechteren Festigkeiten führt bzw. die Verarbeitungszeit der Formstoffmischung herabsetzt (siehe Festigkeitswerte der Mischung 1.08). Hingegen zeigen die erfindungsgemäßen Mischungen 1.10 und 1.11, dass die Festigkeiten weniger stark bis gar nicht beeinflusst werden. Auch die Verarbeitungszeit (größer als 2 h) ist ausreichend gegeben.

**Tabelle 1**

| ***Zusammensetzungen der Formstoffmischungen*** | | | | | |
|---|---|---|---|---|---|
| | Quarzsand H32 | Alkaliwasserglas | Amorphes SiO₂ | Additiv | |
| 1.01 | 100 GT | 2,0 GT ^{a)} | - | - | Vergleich |
| 1.02 | 100 GT | 2,0 GT ^{a)} | 0,5 GT ^{b)} | - | Vergleich |
| 1.03 | 100 GT | 2,0 GT ^{a)} | 0,5 GT ^{b)} | 0,5 GT ^{c)} | Vergleich |
| 1.04 | 100 GT | 2,0 GT ^{a)} | 0,5 GT ^{b)} | 0,5 GT ^{d)} | Vergleich |
| 1.05 | 100 GT | 2,0 GT ^{a)} | 0,5 GT ^{b)} | 0,5 GT ^{e)} | Vergleich |
| 1.06 | 100 GT | 2,0 GT ^{a)} | 0,5 GT ^{b)} | 0,5 GT ^{f)} | Vergleich |
| 1.07 | 100 GT | 2,0 GT ^{a)} | 0,5 GT ^{b)} | 0,5 GT ^{g)} | Vergleich |
| 1.08 | 100 GT | 2,0 GT ^{a)} | 0,5 GT ^{b)} | 0,5 GT ^{h)} | Vergleich |
| 1.09 | 100 GT | 2,0 GT ^{a)} | 0,5 GT ^{b)} | 0,5 GT ⁱ⁾ | erfindungsgem. |
| 1.10 | 100 GT | 2,0 GT ^{a)} | 0,5 GT ^{b)} | 0,5 GT ^{j)} | erfindungsgem. |

| | | | | | |
|---|---|---|---|---|---|
| Vergleich **= nicht erfindungsgemäß** Die Indizes in Tabelle 1 haben jeweils folgende Bedeutung: ^{a)} Alkaliwasserglas mit einem Gewichtsmodul SiO₂:M₂O von ca. 2,1; bezogen auf das gesamte Wasserglas. Feststoffgehalt von ca. 35% ^{b)} Microsilica weiß GHL DL971W (amorphes SiO₂, Fa. RW silicium GmbH; Entstehung bei der metallurgischen Erzeugung von Silizium im Lichtbogenofen) ^{c)} AEROXIDE Alu 130 (pyrogenes Aluminiumoxid mit einer BET-Oberfläche von 130 m²/g; Fa. Evonik Industries AG) ^{d)} AEROXIDE Alu 65 (pyrogenes Aluminiumoxid mit einer BET-Oberfläche von 65 m²/g; Fa. Evonik Industries AG) ^{e)} ARGICAL-M 1000 (Metakaolin, calc. Kaolin, amorphes Material, welches aus lamellenartigen Partikeln besteht, BET-Oberfläche von 17 m²/g; Fa. AGS Mineraux (IMERYS)) ^{f)} ARGICAL-M 1200S (Metakaolin, calc. Kaolin, amorphes Material, welches aus lamellenartigen Partikeln besteht, BET-Oberfläche von 19 m²/g; Fa. AGS Mineraux (IMERYS)) ^{g)} Kaolin FP 80 gemahlen (BET-Oberfläche von 19 m²/g; Fa. Dorfner) ^{h)} ARGICAL C88 R (Kaolinit, BET-Oberfläche von 13 m²/g; AGS Mineraux (IMERYS)) ⁱ⁾ ALODUR FZM S (Fused Zirconia Mullite, Fa. Treibacher Schleifmittel) ^{j)} ALODUR ZKSF (staubförmiges Nebenprodukt bei der Zirkonkorund -Herstellung, Fa. Treibacher Schleifmittel) | | | | | |

**Tabelle 2**

| ***Biegefestigkeiten*** | | | | | |
|---|---|---|---|---|---|
| | Heißfestigkeiten [N/cm²] | Festigkeiten nach 1 h [N/cm²] | Heißfestigkeiten (VZ 1 h) [N/cm²] | Heißfestigkeiten (VZ 2h) [N/cm²] | |
| 1.01 | 90 | 410 | - | - | Vergleich |
| 1.02 | 150 | 470 | 145 | 150 | Vergleich |
| 1.03 | 55 | 200 | - | - | Vergleich |
| 1.04 | 75 | 210 | - | - | Vergleich |
| 1.05 | 115 | 310 | - | - | Vergleich |
| 1.06 | 75 | 270 | - | - | Vergleich |
| 1.07 | 105 | 250 | - | - | Vergleich |
| 1.08 | 130 | 340 | 110 | 100 | Vergleich |
| 1.09 | 145 | 465 | 150 | 140 | erfindungsgem. |
| 1.10 | 165 | 460 | 160 | 165 | erfindungsgem. |

| | | | | | |
|---|---|---|---|---|---|
| Vergleich = nicht erfindungsgemäß - = nicht bestimmt | | | | | |

### Verbesserung der Gussoberfläche

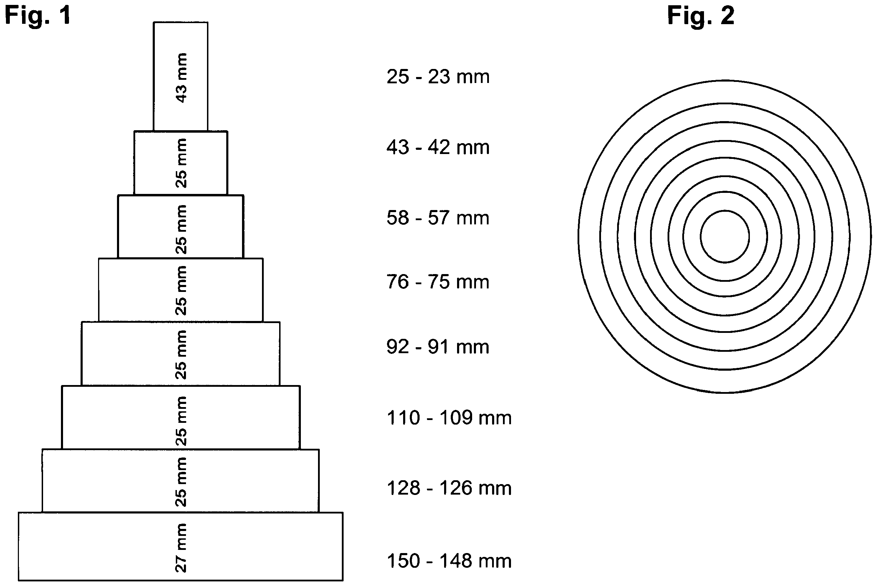

Der Einfluss erfindungsgemäßer partikulärer gemischter Metalloxide auf die Gussoberfläche wurde untersucht. Zu diesem Zweck wurde wie folgt verfahren:
- Sogenannte Stufenkerne wurden hergestellt. Form und Abmessungen sind in Fig. 1 und 2 dargestellt. Fig. 1 zeigt eine Seitenansicht unter Angabe der Stufenhöhen in mm innerhalb der Figur und der Außendurchmesser der Stufen rechts davon (erster Wert Durchmesser der Stufe unten, zweiter Wert Durchmesser der Stufe oben).

In Fig. 2 ist der Stufenkern von oben gezeigt. Die Herstellung erfolgte mit Hilfe einer Hot-Box-Kernschießmaschine, dessen Formwerkzeug auf 180°C erwärmt wurde. Die Formstoffmischung wurde mittels Druck in das Formwerkzeug eingebracht und zur Beschleunigung der Heißaushärtung wurde Heißluft durch die Formstoffmischung geleitet. Die Formstoffmischungen 1.02 sowie 1.09 und 1.10 in Tabelle 1 wurden in eine Sandgießform derart eingebaut, dass nur die Unterseite der breitesten Stufe (die Standfläche des pyramidenartigen Kerns) nicht während des Gießprozesses in Verbindung mit dem Gießmetall kommt.

Die Stufenkerne hängen in der Gießform, welche dann mit dem flüssigen Metall so gefüllt wird, dass die kleinste Stufe (geringste Breite) als erstes in Verbindung mit dem flüssigen Metall kommt.
- Gegossen wurde mit einer Graugussschmelze GG20 (neuere Bezeichnung: GJL20) bei einer Gießtemperatur von ca. 1430 °C und einer Gießhöhe von 55 cm.
- Nach Abkühlen der Gießform wurde das Gussstück mittels Hammerschlägen vom Sand befreit.
- Die Gussteile wurden anschließend hinsichtlich der verbleibenden Sandanhaftungen, der möglichen Versinterungen/Vererzungen und der Rauigkeiten beurteilt. Es wurden zu diesem Zwecke die Noten von 1 (sehr gut) bis 6 (ungenügend) vergeben, welche sich in der Tabelle 3 wiederfinden. Die erhaltenen Gussstücke sind noch nicht frei von Sandanhaftungen, insbesondere im Bereich filigraner Kernpartien (Stufen mit einer geringeren Breite) sind noch Sandanhaftungen zu beobachten, daher wurde wie folgt weiterverfahren.
- Anschließend wurden die Gussstücke mit einer Sandstrahlvorrichtung mit einem leichten Sandstrahldruck von 1 bar gereinigt. Als Strahlgut dienten Glasperlen mit Teilchendurchmessern zwischen 100 und 200 µm. Die Strahlzeit wurde auf eine Minute begrenzt. Die Bedingungen der Sandstrahlreinigung wurden so gewählt, dass Unterschied zwischen den mit unterschiedlichen Formstoffmischungen hergestellten Gussstücken sichtbar gemacht werden können ohne auf die Oberflächengüte im besonderen Maße einzuwirken.
- Die Gussteile wurden anschließend hinsichtlich der möglichen Versinterungen/Vererzungen und der Rauigkeiten der Oberfläche beurteilt. Es wurden zu diesem Zwecke die Noten von 1 (sehr gut) bis 6 (ungenügend) vergeben, welche sich in der Tabelle 3 wiederfinden.

**Tabelle 3**

| ***Beurteilung der Oberflächengüte*** | | | |
|---|---|---|---|
| | Oberflächengüte vor dem Sandstrahlen | Oberflächengüte nach dem Sandstrahlen | |
| 1.02 | 5 | 4 | Vergleich |
| 1.09 | 3 | 2 | erfindungsgem. |
| 1.10 | 2 | 1 | erfindungsgem. |

Der Gussausschnitt der Mischung 1.02 zeigt deutlich mehr Sandanhaftungen/Vererzungen bzw. Rauigkeiten als die Gussausschnitte der Mischungen 1.09 und 1.10. Der positive Effekt des erfindungsgemäßen Pulvers auf die Gussoberflächen wird hier sehr deutlich. Besonders vorteilhafte Ergebnisse werden mit dem staubförmigen Nebenprodukt aus der Zirkonkorund-Herstellung erhalten. Daher ist der Einsatz dieses Stoffes ganz besonders bevorzugt.

Die Oberflächengüte wird durch den Einsatz von Sandstrahlen deutlich verbessert, da verbleibende Sandreste vollständig entfernt werden können - auch die Oberfläche wird durch diesen Einsatz etwas geglättet. Es wurde jedoch sehr darauf geachtet, alle Gussstücke unter gleichen Bedingungen zu bestrahlen. Daher sind die Unterschiede lediglich auf die Zusammensetzungen der Formstoffmischungen zurückzuführen.

Auch ist zu bemerken, dass sogenannte "Blattrippen" nicht oder nur in einem sehr geringen Maße festgestellt werden konnten, obwohl als Formgrundstoff Quarzsand verwendet wurde.

## Patentansprüche

1. Formstoffmischung zur Herstellung von Formen und Kernen für die Metallverarbeitung, umfassend mindestens
a) einen feuerfesten Formgrundstoff;
b) Wasserglas als anorganisches Bindemittel; und
c) zumindest ein partikuläres gemischtes Metalloxid, wobei das partikuläre gemischte Metalloxid
- zumindest ein partikuläres Mischoxid oder
- eine partikuläre Mischung von zumindest zwei Oxiden ist oder
- zumindest ein partikuläre Mischoxid neben zumindest einem weiteren partikulären Oxid oder neben zumindest einem weiteren anderen partikulären Mischoxid vorliegt,
und das partikuläre gemischte Metalloxid zumindest ein Oxid des Aluminiums und zumindest ein Oxid des Zirkoniums umfasst.

2. Formstoffmischung nach Anspruch 1, wobei das partikuläre gemischte Metalloxid weiterhin ein Oxid des Siliziums umfasst, ausgenommen ein partikuläres amorphes Siliziumdioxid.

3. Formstoffmischung nach zumindest einem der vorhergehenden Ansprüche, wobei das partikuläre gemischte Metalloxid in Bezug auf den Anteil der Oxide oder Mischoxide, die zumindest ein Oxid des Aluminiums und zumindest ein Oxid des Zirkoniums umfassen, zwischen 0,05 Gew.% und 2,0 Gew.%, vorzugsweise zwischen 0,1 Gew.% und 1,5 Gew.%, besonders bevorzugt zwischen 0,2 Gew.% und 0,8 Gew.% in der Formstoffmischung enthalten ist, jeweils bezogen auf den Formgrundstoff.

4. Formstoffmischung nach zumindest einem der vorhergehenden Ansprüche, wobei unabhängig voneinander
- das Oxid des Siliziums ein Siliziumdioxid ist;
- das Oxid des Aluminiums ein Aluminiumoxid in Form von α-Al₂O₃ ist;
- das Oxid des Zirkoniums ein Zirkoniumdioxid ist;
- das Oxid des Siliziums und das Oxid des Aluminiums ein Aluminiumsilikat ist, insbesondere ein amorphes Aluminiumsilikat.

5. Formstoffmischung nach zumindest einem der vorhergehenden Ansprüche, wobei das Oxid des Siliziums und das Oxid des Aluminiums ein Aluminiumsilikat ist und bezogen auf die Summe an Aluminium- und Silizium- Atomen größer 50 bis 99 Atom% Aluminium-Atome aufweist, vorzugsweise größer 60 bis 85 Atom%.

6. Formstoffmischung nach Anspruch 4 oder 5, wobei das Aluminiumsilikat ein Inselsilikat, insbesondere ein synthetisches oder natürliches Mullit, oder ein Mitglied der Sillimanit-Gruppe ist, insbesondere Kyanit und unabhängig hiervon das Aluminiumsilikat vorzugsweise kein Schichtsilikat ist oder enthält.

7. Formstoffmischung nach zumindest einem der vorhergehenden Ansprüche, wobei das partikuläre gemischte Metalloxid ein Zirkonkorund und/oder ein Zirkonmullit ist oder enthält.

8. Formstoffmischung nach zumindest einem der vorhergehenden Ansprüche, wobei in dem partikulären gemischten Metalloxid
a) der Anteil des Oxids des Aluminiums, berechnet als Al₂O₃,
- größer als 25 Gew.% beträgt,
- vorzugsweise größer als 25 Gew.% und kleiner als 80 Gew.%,
- besonders bevorzugt größer als 30 Gew.% und kleiner als 70 Gew.%,
- besonders bevorzugt größer als 40 Gew.% und kleiner als 60 Gew.% beträgt;
b) der Anteil des Oxids des Zirkoniums, berechnet als ZrO₂,
- größer als 2 Gew.% beträgt,
- vorzugsweise größer als 2 Gew.% und kleiner als 50 Gew.%,
- besonders bevorzugt größer als 4 Gew.% und kleiner als 40 Gew.%,
- besonders bevorzugt größer als 8 Gew.% und kleiner als 30 Gew.% beträgt; und unabhängig
c) der Anteil des Oxids des Siliziums, berechnet als SiO₂, wenn vorhanden,
- größer als 5 Gew.% beträgt,
- vorzugsweise größer als 5 Gew.% und kleiner als 60 Gew.%,
- besonders bevorzugt größer als 15 Gew.% und kleiner als 50 Gew.%,
- besonders bevorzugt größer als 20 Gew.% und kleiner als 45 Gew.% beträgt; und unabhängig
d) vorzugsweise der Anteil anderer Metalle berechnet als deren Oxide in der Hauptoxidationsstufe, insbesondere Fe₂O₃, Na₂O TiO₂, MgO und CaO, kleiner als 12 Gew.%, vorzugsweise kleiner als 8 Gew.% und insbesondere bevorzugt kleiner als 4 Gew.%. beträgt.

9. Formstoffmischung nach zumindest einem der vorhergehenden Ansprüche, wobei das gemischte Oxid ein aluminiumoxidhaltiger und zirkoniumoxidhaltiger Staub erhältlich als Nebenprodukt bei der Zirkonkorund-Herstellung ist.

10. Formstoffmischung nach zumindest einem der vorhergehenden Ansprüche, wobei die spezifische Oberfläche des Mischoxids kleiner als 50 m²/g, bevorzugt kleiner als 30 m²/g, besonders bevorzugt kleiner als 17 m²/g und unabhängig hiervon größer als 0,1 m²/g, bevorzugt größer als 0,5 m²/g, besonders bevorzugt größer als 1 m²/g, beträgt.

11. Formstoffmischung nach zumindest einem der vorhergehenden Ansprüche, wobei die durchschnittliche Primärpartikelgröße bestimmt als Durchmesser des/der partikulären gemischten Metalloxide zwischen 0,01 µm und 50 µm, insbesondere zwischen 0,02 µm und 20 µm, besonders bevorzugt zwischen 0,02 µm und 10 µm beträgt.

12. Formstoffmischung nach zumindest einem der vorhergehenden Ansprüche, wobei der Rückstand bei einer Siebung des partikulären gemischten Metalloxids durch ein Sieb mit 75 µm Maschenweite (200 mesh) nicht mehr als 50 Gew.%, vorzugsweise nicht mehr als 30 Gew.%, weiter bevorzugt nicht mehr als 20 Gew.% und besonders bevorzugt nicht mehr als 15 Gew.%. beträgt.

13. Formstoffmischung nach zumindest einem der vorhergehenden Ansprüche, wobei das mittlere Verhältnis größter Längenausdehnung zu kleinster Längenausdehnung für alle Raumrichtungen der jeweiligen Partikel des partikulären gemischten Metalloxids bevorzugt kleiner als 10:1, besonders bevorzugt kleiner 5:1 und insbesondere bevorzugt kleiner als 3:1 und insbesondere bevorzugt kleiner als 1,1:1 beträgt.

14. Formstoffmischung nach einem der vorherigen Ansprüche, wobei das partikuläre gemischte Metalloxid als schütt- und rieselfähiges Pulver in der Formstoffmischung eingesetzt wird.

15. Formstoffmischung nach einem der vorherigen Ansprüche, wobei die Formstoffmischung weiterhin durch eines oder mehrere der folgenden Merkmale gekennzeichnet ist:
a) die Formstoffmischung enthält maximal 1 Gew.%, vorzugsweise maximal 0,2 Gew.%, organische Verbindungen;
b) die Formstoffmischung enthält weiterhin Bariumsulfat, vorzugsweise in einer Menge von 0,02 bis 5,0 Gew.%, besonders bevorzugt 0,1 bis 2,0 Gew.%, jeweils bezogen die gesamte Formstoffmischung;
c) das Wasserglas weist ein molares Modul SiO₂/M₂O von 1,6 bis 4,0, vorzugsweise 2,0 bis kleiner 3,5, mit M gleich in der Summe Lithium, Natrium und Kalium auf;
d) die Formstoffmischung enthält 0,5 bis 5 Gew.% Wasserglas, vorzugsweise 1 bis 3,5 Gew.% Wasserglas, bezogen auf den Formgrundstoff, wobei der Feststoffanteil des Wasserglases 25 bis 65 Gew.%, vorzugsweise von 30 bis 60 Gew.%, beträgt;
e) die Formstoffmischung enthält weiterhin Tenside, vorzugsweise ausgewählt aus der Gruppe der anionischen Tenside, insbesondere solche mit einer Sulfonsäure- oder Sulfonatgruppe, insbesondere jeweils in einem Anteil von 0,001 bis 1 Gew. %, besonders bevorzugt 0,01 bis 0,2 Gew. %, bezogen auf das Gewicht des feuerfesten Formgrundstoffs;
f) die Formstoffmischung enthält weiterhin Graphit, vorzugsweise von 0,05 bis 1 Gew.%, insbesondere 0,05 bis 0,5 Gew.%, bezogen auf das Gewicht des feuerfesten Formgrundstoffs;
g) die Formstoffmischung enthält weiterhin zumindest eine phosphorhaltige Verbindung, vorzugsweise von 0,05 und 1,0 Gew.%, besonders bevorzugt 0,1 und 0,5 Gew.%, bezogen auf das Gewicht des feuerfesten Formgrundstoffs.

16. Verfahren zur Herstellung von Gießformen oder Kernen umfassend:
• Bereitstellen der Formstoffmischung nach zumindest einem der Ansprüche 1 bis 15,
• Einbringen der Formstoffmischung in eine Form, und
• Aushärten der Formstoffmischung.

17. Verfahren nach Anspruch 16, wobei die Formstoffmischung mittels einer Kernschießmaschine mit Hilfe von Druckluft in die Form eingebracht wird und die Form ein Formwerkzeug ist und das Formwerkzeug mit einem oder mehreren Gasen durchströmt wird, insbesondere CO₂ oder Gase enthaltend CO₂.

18. Verfahren nach Anspruch 16 oder 17, wobei die Formstoffmischung zum Aushärten einer Temperatur von zumindest 100°C, vorzugsweise für unter 5 min ausgesetzt wird.

19. Form oder Kern herstellbar nach zumindest einem der Ansprüche 16 bis 18.

20. Verwendung der Formstoffmischung nach zumindest einem der Ansprüche 1 bis 15 für das Gießen von Eisenmetallen oder Aluminium, enthaltend vorzugsweise weiterhin Mikrohohlkugeln insbesondere Aluminiumsilikatmikrohohlkugeln und/oder Borsilikatmikrohohlkugeln.

21. Mehrkomponenten-System zur Herstellung von Formen oder Kernen umfassend zumindest die folgende räumlich separat voneinander vorliegenden Komponenten (A) und (B):
(A) eine pulverförmige Additiv-Komponente umfassend zumindest
- ein partikuläres gemischtes Metalloxid, wobei das gemischte partikuläre Metalloxid
- zumindest ein partikuläres Mischoxid oder
- eine partikuläre Mischung von zumindest zwei Oxiden ist oder
- zumindest ein partikuläres Mischoxid neben zumindest einem weiteren partikulären Oxid oder neben zumindest einem weiteren anderen partikulären Mischoxid vorliegt,
und das partikuläre gemischte Metalloxid zumindest ein Oxid des Aluminiums und zumindest ein Oxid des Zirkoniums umfasst, und
- kein Wasserglas;
(B) eine flüssige Binder-Komponente (B) umfassend zumindest
- Wasserglas enthaltend Wasser.

22. Mehrkomponenten-System nach Anspruch 21 weiterhin umfassend-(F) eine rieselfähige Feuerfest-Komponente (F) umfassend
- einen feuerfesten Formgrundstoff und
- kein Wasserglas.

23. Mehrkomponenten-System nach Anspruch 21 oder 22, zur Herstellung der Formstoffmischung nach einem der Ansprüche 1 bis 15.

## Claims

1. A mold material mixture for producing casting molds and cores for metal processing, comprising at least
a) a refractory mold base material;
b) water glass as an inorganic binder; and
c) at least one particulate mixed metal oxide, wherein the particulate mixed metal oxide
- is at least a particulate mixed oxide or
- is a particulate mixture of at least two oxides or
- at least one particulate mixed oxide in addition to at least one additional particulate oxide or in addition to at least one further, different particulate mixed oxide is present,
and the particulate mixed metal oxide comprises at least one oxide of aluminum and at least one oxide of zirconium.

2. The mold material mixture according to claim 1, wherein the particulate mixed metal oxide further comprises an oxide of silicon other than a particulate amorphous silicon dioxide.

3. The mold material mixture according to at least one of the preceding claims, wherein the particulate mixed metal oxide relative to the fraction of the oxides or mixed oxides that comprise at least one oxide of aluminum and at least one oxide of zirconium is present at between 0.05 wt.% and 2.0 wt.%, preferably between 0.1 wt.% and 1.5 wt.%, particularly preferably between 0.2 wt.% and 0.8 wt.% in the mold material mixture, in each case based on the mold base material.

4. The mold material mixture according to at least one of the preceding claims, wherein independent of one another
• the oxide of silicon is a silicon dioxide;
• the oxide of aluminum is an aluminum oxide in the form of α-Al₂O₃;
• the oxide of zirconium is a zirconium dioxide;
• the oxide of silicon and the oxide of aluminum is an aluminum silicate, especially an amorphous aluminum silicate.

5. The mold material mixture according to at least one of the preceding claims, wherein the oxide of silicon and the oxide of aluminum is an aluminum silicate and, based on the sum of aluminum and silicon atoms, comprises more than 50 to 99 atom% aluminum atoms, preferably more than 60 to 85 atom%.

6. The mold material mixture according to claim 4 or 5, wherein the aluminum silicate comprises or consists of a nesosilicate, in particular is a synthetic or natural mullite or a member of the sillimanite group, especially kyanite, and independently thereof, the aluminum silicate preferably is no layered silicate and does not contain a layered silicate.

7. The mold material mixture according to at least one of the preceding claims, wherein the particulate mixed metal oxide is or contains a zirconium corundum and/or a zirconium mullite.

8. The mold material mixture according to at least one of the preceding claims, wherein in the particulate mixed metal oxide
a) the fraction of the oxide of aluminum, calculated as Al₂O₃:
- is greater than 25 wt.%,
- preferably greater than 25 wt.% and less than 80 wt.%,
- particularly preferably greater than 30 wt.% and less than 70 wt.%,
- particularly preferably greater than 40 wt.% and less than 60 wt.%;
b) the fraction of the oxide of zirconium, calculated as ZrO_{2;}
- is greater than 2 wt.%,
- preferably greater than 2 wt.% and less than 50 wt.%,
- particularly preferably greater than 4 wt.% and less than 40 wt.%,
- particularly preferably greater than 8 wt.% and less than 30 wt.%; and independently
c) the fraction of the oxide of silicon, calculated as SiO₂, if present,
- is greater than 5 wt.%,
- preferably greater than 5 wt.% and less than 60 wt.%,
- particularly preferably greater than 15 wt.% and less than 50 wt.%,
- particularly preferably greater than 20 wt.% and less than 45 wt.%;
and independently
d) preferably the fraction of other metals calculated as their oxides in the principal oxidation step, particularly Fe₂O₃, Na₂O TiO₂, MgO and CaO, is less than 12 wt.%, preferably less than 8 wt.% and particularly preferably less than 4 wt.%.

9. The mold material mixture according to at least one of the preceding claims, wherein the mixed oxide is an aluminum oxide-containing and zirconium oxide-containing dust that can be obtained as a byproduct in zirconium corundum production.

10. The mold material mixture according to at least one of the preceding claims, wherein the specific surface of the mixed oxide is less than 50 m²/g, preferably less than 30 m²/g, particularly preferably less than 17 m²/g and independently thereof is greater than 0.1 m²/g, preferably greater than 0.5 m²/g, particularly preferably greater than 1 m²/g.

11. The mold material mixture according to at least one of the preceding claims, wherein the mean primary particle size determined as the diameter of particulate mixed metal oxides is between 0.01 µm and 50 µm, particularly between 0.02 µm and 20 µm, particularly preferably between 0.02 µm and 10 µm.

12. The mold material mixture according to at least one of the preceding claims, wherein the residue from sieving the particulate mixed metal oxide through a screen with 75 µm mesh size (200 mesh) is no more than 50 wt.%, preferably no more than 30 wt.%, more preferably no more than 20 wt.% and particularly preferably no more than 15 wt.%.

13. The mold material mixture according to at least one of the preceding claims, wherein the mean ratio of the greatest longitudinal dimension to the smallest longitudinal dimension for all spatial directions of the respective particle of the particulate mixed metal oxide is preferably less than 10:1, particularly preferably less than 5:1 and especially preferably less than 3:1 and especially preferably less than 1.1:1.

14. The mold material mixture according to one of the preceding claims, wherein the particulate mixed metal oxide is used as a pourable and free-flowing powder in the mold material mixture.

15. The mold material mixture according to one of the preceding claims, wherein the mold material mixture is further **characterized by** one or more of the following features:
a) the mold material mixture contains a maximum of 1 wt. %, preferably a maximum of 0,2 wt. %, organic compounds;
b) the mold material mixture further comprises barium sulfate, preferably in a quantity of 0.02 to 5.0 wt.%, particularly preferably 0.1 to 2.0 wt.%, in each case based on the total mold material mixture;
c) the water glass has a SiO₂/M₂O molar module of 1.6 to 4.0, preferably 2.0 to less than 3.5, with M equals in the sum lithium, sodium and potassium;
d) the mold material mixture contains 0.5 to 5 wt.% water glass, preferably 1 to 3.5 wt.% water glass, based on the mold base material, wherein the solid fraction of the water glass amounts to 25 to 65 wt.%, preferably 30 to 60 wt.%;
e) the mold material mixture further comprises surfactants, preferably selected from the group of anionic surfactants, particularly those with a sulfonic acid or sulfonate group, particularly in each case in a fraction of 0.001 to 1 wt.%, particularly preferably 0.01 to 0.2 wt.%, based on the weight of the refractory mold base material;
f) the mold material mixture further comprising graphite, preferably from 0.05 to 1 wt.%, particularly 0.05 to 0.5 wt.%, based on the weight of the refractory mold base material;
g) the mold material mixture further comprises at least one phosphorus-containing compound, preferably at between 0.05 and 1.0 wt.%, particularly preferably 0.1 and 0.5 wt.%, based on the weight of the refractory mold base materials.

16. A method for production of casting molds or cores comprising:
• supplying the mold material mixture according to at least one of claims 1 to15,
• introducing the mold material mixture into a mold, and
• curing the mold material mixture.

17. The method according to claim 16, wherein the mold material mixture is introduced into the mold with a core shooting machine using compressed air and the mold is a molding tool and the molding tool has one or more gases passing through it, particularly CO₂ or gases containing CO₂.

18. A method according to claim 16 or 17, wherein for curing, the mold material mixture is exposed to a temperature of at least 100°C, preferably for less than 5 min.

19. A mold or core producible by at least one of claims 16 to 18.

20. The use of the mold material mixture according to at least one of claims 1 to 15 for casting ferrous metals or aluminum, further preferably comprising hollow microspheres, particularly aluminum silicate hollow microspheres and/or borosilicate hollow microspheres.

21. A multicomponent system for production of molds or cores comprising at least the following spatially separated components (A) and (B):
(A) a powdered additive component comprising at least
- a particulate mixed metal oxide, wherein the mixed particulate metal oxide
- is at least one particulate mixed oxide or
- is a particular mixture of at least two oxides or
- at least one particulate mixed oxide along with at least one other particulate oxide or in addition to at least one additional particulate mixed oxide,
and the particulate mixed oxide comprises at least one oxide of aluminum and at least one oxide of zirconium, and
- no water glass; and
(B) a liquid binder component (B) comprising at least
- water glass containing water.

22. The multicomponent system according to claim 21, further comprising-(F) a free-flowing refractory component (F) comprising
- a refractory mold base material and
- no water glass.

23. The multicomponent system according to claim 21 or 22 for producing the mold material mixture according to one of claims 1 to 15.

## Revendications

1. Mélange de matières de moulage pour la fabrication de moules et de noyaux pour la transformation des métaux, comprenant au moins
a) une matière de base de moulage réfractaire ;
b) du verre soluble comme liant inorganique ; et
c) au moins un oxyde métallique mixte particulaire, l'oxyde métallique mixte particulaire
- étant au moins un oxyde mixte particulaire ou
- un mélange particulaire d'au moins deux oxydes ou
- au moins un oxyde mixte particulaire étant présent en plus d'au moins un autre oxyde particulaire ou en plus d'au moins encore un autre oxyde mixte particulaire,
et l'oxyde métallique mixte particulaire comportant au moins un oxyde de l'aluminium et au moins un oxyde du zirconium.

2. Mélange de matières de moulage selon la revendication 1, dans lequel l'oxyde métallique mixte particulaire comporte en outre un oxyde du silicium, à l'exclusion d'un dioxyde de silicium amorphe particulaire.

3. Mélange de matières de moulage selon au moins l'une des revendications précédentes, dans lequel l'oxyde métallique mixte particulaire est contenu dans le mélange de matières de moulage en ce qui concerne la fraction des oxydes ou des oxydes mixtes, qui comportent au moins un oxyde de l'aluminium et au moins un oxyde du zirconium, entre 0,05 % en poids et 2,0 % en poids, de préférence entre 0,1 % en poids et 1,5 % en poids, de façon particulièrement préférée entre 0,2 % en poids et 0,8 % en poids, à chaque fois par rapport à la matière de base de moulage.

4. Mélange de matières de moulage selon au moins l'une des revendications précédentes, dans lequel indépendamment l'un de l'autre
- l'oxyde du silicium est un dioxyde de silicium ;
- l'oxyde de l'aluminium est un oxyde d'aluminium sous la forme d' α-Al₂O₃ ;
- l'oxyde du zirconium est un dioxyde de zirconium ;
- l'oxyde du silicium et l'oxyde de l'aluminium sont un silicate d'aluminium, en particulier un silicate d'aluminium amorphe.

5. Mélange de matières de moulage selon au moins l'une des revendications précédentes, dans lequel l'oxyde du silicium et l'oxyde de l'aluminium sont un silicate d'aluminium et présentent, par rapport à la somme des atomes d'aluminium et de silicium, plus de 50 à 99 % atomiques d'atomes d'aluminium, de préférence plus de 60 à 85 % atomiques.

6. Mélange de matières de moulage selon l'une des revendications 4 ou 5, dans lequel le silicate d'aluminium est un nésosilicate, en particulier une mullite synthétique ou naturelle, ou un membre du groupe de la sillimanite, en particulier la kyanite et indépendamment de cela, le silicate d'aluminium de préférence n'est pas un silicate lamellaire ou ne contient pas de silicate lamellaire.

7. Mélange de matières de moulage selon au moins l'une des revendications précédentes, dans lequel l'oxyde métallique mixte particulaire est ou contient un zircon-corindon et/ou une zircon-mullite.

8. Mélange de matières de moulage selon au moins l'une des revendications précédentes, dans lequel, dans l'oxyde métallique mixte particulaire
a) la fraction de l'oxyde de l'aluminium, calculée en tant qu' Al₂O₃,
- s'élève à plus de 25 % en poids,
- de préférence à plus de 25 % en poids et à moins de 80 % en poids,
- de façon particulièrement préférée à plus de 30 % en poids et à moins de 70 % en poids,
- de façon particulièrement préférée à plus de 40 % en poids et à moins de 60 % en poids ;
b) la fraction de l'oxyde du zirconium, calculée en tant que Zr02,
- s'élève à plus de 2 % en poids,
- de préférence à plus de 2 % en poids et à moins de 50 % en poids ;
- de façon particulièrement préférée à plus de 4 % en poids et à moins de 40 % en poids ;
- de façon particulièrement préférée à plus de 8 % en poids et à moins de 30 % en poids ; et indépendamment
c) la fraction de l'oxyde du silicium, calculée en tant que SiO₂, lorsqu'elle est présente,
- s'élève à plus de 5 % en poids,
- de préférence à plus de 5 % en poids et à moins de 60 % en poids ;
- de façon particulièrement préférée à plus de 15 % en poids et à moins de 50 % en poids ;
- de façon particulièrement préférée à plus de 20 % en poids et à moins de 45 % en poids ; et indépendamment
d) de préférence la fraction des autres métaux, calculée en tant que leurs oxydes dans l'étape d'oxydation principale, en particulier Fe₂O₃, Na₂O TiO₂, MgO et CaO, s'élève à moins de 12 % en poids, de préférence à moins de 8 % en poids, et de façon particulièrement préférée, à moins de 4 % en poids.

9. Mélange de matières de moulage selon au moins l'une des revendications précédentes, dans lequel l'oxyde mixte est une poussière à teneur en oxyde d'aluminium et à teneur en oxyde de zirconium, pouvant être obtenue comme sous-produit lors de la fabrication du zircon-corindon.

10. Mélange de matières de moulage selon au moins l'une des revendications précédentes, dans lequel la surface spécifique de l'oxyde mixte s'élève à moins de 50 m²/g, de préférence à moins de 30 m²/g, de façon particulièrement préférée à moins de 17 m²/g et indépendamment de cela à plus de 0,1 m²/g, de préférence à plus de 0,5 m²/g, de façon particulièrement préférée à plus de 1 m²/g.

11. Mélange de matières de moulage selon au moins l'une des revendications précédentes, dans lequel la grosseur moyenne des particules primaires définie comme diamètre du/des oxydes métalliques mixtes particulaires est entre 0,01 *µ*m et 50 *µ*m, en particulier entre 0,02 *µ*m et 20 *µ*m, de façon particulièrement préférée entre 0,02 *µ*m et 10 *µ*m.

12. Mélange de matières de moulage selon au moins l'une des revendications précédentes, dans lequel le résidu lors d'un tamisage de l'oxyde de largeur mixte particulaire par un tamis ayant 75 *µ*m d'ouverture de maille (200 mesh) est de pas plus de 50 % en poids, de préférence de pas plus de 30 % en poids, de façon davantage préférée de pas plus de 20 % en poids et de façon particulièrement préférée de pas plus de 15 % en poids.

13. Mélange de matières de moulage selon au moins l'une des revendications précédentes, dans lequel le rapport moyen / dimension longitudinale la plus grande à dimension longitudinale la plus petite pour toutes les directions spatiales des particules respectives de l'oxyde métallique mixte particulaire est de préférence de moins de 10:1, de façon particulièrement préférée de moins de 5:1 et de façon spécialement préférée de moins de 3:1 et de façon spécialement préférée de moins de 1,1:1.

14. Mélange de matières de moulage selon l'une des revendications précédentes, dans lequel l'oxyde métallique mixte particulaire est introduit comme poudre versable et s'écoulant librement dans le mélange des matières de moulage.

15. Mélange de matières de moulage selon l'une des revendications précédentes, dans lequel le mélange de matières de moulage est en outre **caractérisé par** une ou plusieurs des caractéristiques suivantes :
a) le mélange des matières de moulage contient au maximum 1 % en poids, de façon préférée au maximum 0,2 % en poids, de composés organiques ;
b) le mélange de matières de moulage contient en outre du sulfate de baryum, de façon préférée dans une quantité de 0,02 à 5,0 % en poids, de façon particulièrement préférée de 0,1 à 2,0 % en poids à chaque fois par rapport au mélange total de matières à mouler;
c) le verre soluble présente un module molaire SiO₂/M₂O de 1,6 à 4,0, de préférence de 2,0 à moins de 3,5, avec M égal au total lithium, sodium et potassium ;
d) le mélange des matières de moulage contient 0,5 à 5 % en poids de verre soluble, de préférence de 1 à 3,5 % en poids de verre soluble, par rapport à la matière de base de moulage, la fraction solide du verre soluble étant de 25 à 65 % en poids, de préférence de 30 à 60 % en poids ;
e) le mélange des matières de moulage contient en outre des tensio-actifs, de préférence choisis dans le groupe des tensio-actifs anioniques, en particulier ceux avec un groupe acide sulfonique ou sulfonate, en particulier à chaque fois dans une fraction de 0,001 à 1 % en poids, de façon particulièrement préférée de 0,01 à 0,2 % en poids, par rapport au poids de la matière de base de moulage réfractaire ;
f) le mélange des matières de moulage contient en outre du graphite, de préférence de 0,05 à 1 % en poids, en particulier 0,05 à 0,5 % en poids, par rapport au poids de la matière de base de moulage réfractaire ;
g) le mélange des matières de moulage contient en outre au moins un composé contenant du phosphore, de préférence entre 0,05 et 1,0 % en poids, de façon particulièrement préférée entre 0,1 et 0,5 % en poids, par rapport au poids de la matière de base de moulage réfractaire.

16. Procédé de fabrication de moules de coulée ou de noyaux comprenant :
• fourniture du mélange de matières de moulage selon au moins l'une des revendications 1 à 15 ;
• introduction du mélange de matières de moulage dans un moule ; et
• durcissement du mélange de matières de moulage.

17. Procédé selon la revendication 16, dans lequel le mélange de matières de moulage est introduit dans le moule au moyen d'une machine à tirer des noyaux à l'aide d'air comprimé, et le moule est un outil de moulage et l'outil de moulage est balayé par un ou plusieurs gaz, en particulier CO₂ ou des gaz contenant CO₂.

18. Procédé selon l'une des revendications 16 ou 17, dans lequel le mélange de matières de moulage est, pour le durcissement, soumis à une température d'au moins 100°C, de préférence pendant une durée inférieure à 5 min.

19. Moule ou noyau pouvant être fabriqué selon au moins l'une des revendications 16 à 18.

20. Utilisation du mélange des matières de moulage selon au moins l'une des revendications 1 à 15 pour la coulée de métaux ferreux ou d'aluminium, contenant de préférence également des microbilles creuses, en particulier des microbilles creuses de silicate d'aluminium et/ou des microbilles creuses de silicate de bore.

21. Système à plusieurs composants pour la fabrication de moules ou de noyaux comportant au moins les composants (A) et (B) suivants présents de façon séparée l'un de l'autre dans l'espace :
(A) un composant additif pulvérulent comportant au moins
- un oxyde métallique mixte particulaire, l'oxyde métallique particulaire mixte
- étant au moins un oxyde mixte particulaire ou
- un mélange particulaire d'au moins deux oxydes, ou
- au moins un oxyde mixte particulaire étant présent en plus d'au moins un autre oxyde particulaire ou en plus d'au moins encore un autre oxyde mixte particulaire ;
et l'oxyde métallique mixte particulaire comportant au moins un oxyde de l'aluminium et au moins un oxyde du zirconium, et
- pas de verre soluble ;
(B) un composant liant fluide (B) comportant au moins
- du verre soluble contenant de l'eau.

22. Système à plusieurs composants selon la revendication 21, comportant en outre
(F) un composant réfractaire s'écoulant librement (F) comportant
- une matière de base de moulage réfractaire et
- pas de verre soluble.

23. Système à plusieurs composants selon l'une des revendications 21 ou 22, pour la fabrication du mélange de matières de moulage selon l'une des revendications 1 à 15.
